# EUROPEAN PATENT APPLICATION

(11) **EP 4 236 450 A1**
(43) Date of publication of application: **30.08.2023**
(21) Application number: 20958127.1
(22) Date of filing: 21.10.2020
(51) Int. Cl.: H04W 36/00

(54) **IAB-NODE MIGRATION METHOD AND APPARATUS**

(71) Applicant: FUJITSU LIMITED, Kawasaki-shi, Kanagawa 211-8588 (JP)
(72) Inventor: JIA, Meiyi, Beijing 100027 (CN); YI, Su, Beijing 100027 (CN); ZHANG, Lei, Beijing 100027 (CN)
(74) Representative: Haseltine Lake Kempner LLP
(86) International application number: PCT/CN2020/122611
(87) International publication number: WO 2022/082544

(57) **Abstract**

A migration method and apparatus for an IAB-node.The method is applicable to a first terminal equipment, the first terminal equipment including a terminal equipment served by a first IAB-node and/or a terminal equipment served by a descendant IAB-node of the first IAB-node, the method including: storing first configuration information, the first configuration information including security configuration configured by a target IAB donor node; and applying the security configuration in a stored first configuration information when first indication information is obtained or the security configuration in the stored first configuration information includes security configuration corresponding to a selected or reselected cell.

## Description

### Technical Field

This disclosure relates to the field of communication technologies.

### Background

Integrated access and backhaul (IAB) ensures wireless relay in NG-RAN. A relay node, namely, an IAB-node, supports NR access and backhaul. The backhaul may include a single hop or multiple hops. An end point of a network side NR backhaul, namely, an IAB donor, refers to a gNB that supports additional functions of the IAB. The IAB donor may also be referred to as an IAB donor node.

The IAB-node supports functions of a gNB-DU (distributed unit), i.e. an IAB-DU. The IAB-DU terminates an NR access interface to a terminal equipment and a next hop of IAB-node, and terminates an F 1 protocol of a gNB-CU function on the IAB donor. In addition, the IAB-node also supports a subset of terminal equipment functions (LTE functions), namely, IAB-MT, which includes, for example, functions of a gNB-DU connected to another IAB-node or the IAB donor, a gNB-CU (centralized unit) connected to the IAB donor and a physical layer, layer 2 (L2), RRC (radio resource control) and NAS (non-access stratum) connected to a core network.

The IAB-node is connected to an IAB donor via one or more hops. In topology, the IAB donor is a root node, a neighboring node on the IAB-DU interface of the IAB-node is referred to as a descendant IAB-node, i.e. a descendant IAB-node, and a neighboring node on an IAB-MT interface is referred to as a parent node, i.e. a parent IAB-node.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In some cases, migration of IAB-nodes is needed. Migration of IAB-nodes may also be referred to as topology adaptation of IAB-nodes. For example, after measuring link quality, an IAB-node determines to migrate from an original path to a new path. The original path is referred to as a source path, the new path is referred to as a target path, and an IAB-node for migration is referred to as a migration IAB-node.

A scenario of the migration or topology adaptation of an IAB-node may include intra-IAB-donor-CU and inter-IAB-donor-CU migration or topology adaptation.

For the scenario of intra-IAB-donor-CU migration or topology adaptation of an IAB-node, both a source parent IAB-node and a target parent IAB-node are served by the same IAB-donor-CU. The target parent IAB-node may use an IAB-donor-DU different from that of the source parent IAB-node, and the source path and the target path may have common nodes.

Rel-17 eIAB supports inter-CU IAB migration. For a scenario of inter-IAB-donor-CU migration or topology adaptation of an IAB-node, the source parent IAB-node and the target parent IAB-node are served by different IAB-donor-CUs, and the target parent IAB-node uses an IAB-donor-DU different from that of the source parent IAB-node.

For the scenario of inter-IAB-donor-CU migration or topology adaptation of an IAB-node, a migration or topology adaptation process or mechanism migrating allows migration of all or a part of IAB-nodes directly or indirectly served by the IAB-node, namely, descendant IAB-nodes and/or terminal equipments; and it is assumed that at a new IAB-donor-CU, a parent-descendant nodes relationship (including IAB-nodes and terminal equipments) remains unchanged.

A process of inter-IAB-donor-CU migration or topology adaptation of an IAB-node involves three stages as follows: (1) migration of an IAB-MT of the migrating IAB-node; (2) migration of an IAB-DU in the migrating IAB-node; and (3) migration of a terminal equipment served by the migrating IAB-node and a descendant IAB-node served by the IAB-node, that is, migration of an IAB-MT of the descendant node.

The above three stages may be processes independent of each other, and an order of executing stages (1) - (3) is not limited.

It was found by the inventors that in existing techniques, switch of a migrating IAB-node is first completed, that is, the migrating IAB-node first establishes a target path with a target IAB donor, and then an IAB-MT of a terminal equipment and/or a descendant IAB-node served by the migrating IAB-node detects an RLF and performs reestablishment with the migrating IAB-node or other IAB-nodes, thereby completing switch of the terminal equipment and/or the descendant IAB-node.

Based on the existing techniques, services of the terminal equipment are interrupted during a process of inter-IAB-donor-CU migration or topology adaptation from the migrating IAB-node until completion of reestablishment of the terminal equipment with the migrating IAB-node or other IAB-nodes, thereby reducing user experiences.

Considering IAB protocol stacks, a PDCP entity is located in an IAB-donor-CU, which means that a process of inter-CU migration of an IAB-node requires updating a security key of the terminal equipment served by the migrating IAB-node or its descendant IAB-node.

If a signaling process similar to the switch of the IAB-MT in the migrating IAB-node is used, considering that the three stages of the process of the inter-IAB-donor-CU migration or topology adaptation of an IAB-node are independent, there exist the following issues: if stage (1) is executed first, that is, migration of the IAB-MT of the IAB-node, after the IAB-MT is switched to the target path, the IAB-donor-CU uses a message (such as an RRC reconfiguration message) protected by a new key of the target IAB donor to configure a new key of the target IAB donor for the above terminal equipment, the terminal equipment is unable to obtain the message via an old key of a source IAB donor, which may result in a failure of integrity verification, thereby triggering connection reestablishment.

In order to solve one or more of the above problems, embodiments of this disclosure provide a migration method and apparatus for an IAB-node.

According to a first aspect of the embodiments of this disclosure, there is provided a migration apparatus for an IAB-node, applicable to a first terminal equipment, the first terminal equipment including a terminal equipment served by a first IAB-node and/or a terminal equipment served by a descendant IAB-node of the first IAB-node, the apparatus including: a first storage unit configured to store first configuration information, the first configuration information including security configuration configured by a target IAB donor node; and a first applying unit configured to apply the security configuration in a stored first configuration information when first indication information is obtained or the security configuration in the stored first configuration information includes security configuration corresponding to a selected or reselected cell.

According to a second aspect of the embodiments of this disclosure, there is provided a migration apparatus for an IAB-node, applicable to a first IAB-node, the apparatus including: a first transmitting unit configured to transmit first configuration information to a terminal equipment served by the first IAB-node and/or a descendant IAB-node of the first IAB-node, the first configuration information including security configuration configured by a target IAB donor node; and a second transmitting unit configured to transmit first indication information to the terminal equipment and/or the descendant IAB-node, the first indication information being used for indicating that a first terminal equipment applies the security configuration in the first configuration information, the first terminal equipment including the terminal equipment served by the first IAB-node and/or a terminal equipment served by the descendant IAB-node of the first IAB-node.

According to a third aspect of the embodiments of this disclosure, there is provided a migration apparatus for an IAB-node, applicable to a first IAB donor node, the first IAB donor node being a source IAB donor node of a first IAB-node, the apparatus including: a third transmitting unit configured to transmit first configuration information to the first IAB-node, the first configuration information including security configuration configured by a target IAB donor node; and a fourth transmitting unit configured to transmit third indication information to the target IAB donor node, the third indication information being used for indicating that the first terminal equipment applies the security configuration in the first configuration information, the first terminal equipment including a terminal equipment served by the first IAB-node and/or a terminal equipment served by a descendant IAB-node of the first IAB-node.

According to a fourth aspect of the embodiments of this disclosure, there is provided a terminal equipment, including the apparatus as described in the embodiment of the first aspect of this disclosure.

According to a fifth aspect of the embodiments of this disclosure, there is provided a network device, including the apparatus as described in the embodiment of the second or third aspect of this disclosure.

According to a sixth aspect of the embodiments of this disclosure, there is provided a communication system, including a first network device and a terminal equipment, the terminal equipment including the apparatus as described in the embodiment of the first aspect of this disclosure, and the first network device including the apparatus as described in the embodiment of the third aspect of this disclosure.

According to a seventh aspect of the embodiments of this disclosure, there is provided a communication system, including a first network device, a fourth network device and a terminal equipment, the terminal equipment including the apparatus as described in the embodiment of the first aspect of this disclosure, the first network device including the apparatus as described in the embodiment of the third aspect of this disclosure, and the fourth network device being a target IAB donor node of a first IAB-node.

According to an eighth aspect of the embodiments of this disclosure, there is provided a communication system, including a first network device, a second network device and a terminal equipment, the terminal equipment including the apparatus as described in the embodiment of the first aspect of this disclosure, the first network device including the apparatus as described in the embodiment of the third aspect of this disclosure, and the second network including the apparatus as described in the embodiment of the second aspect of this disclosure.

According to a ninth aspect of the embodiments of this disclosure, there is provided a communication system, including a first network device, a second network device, a third network device and a terminal equipment, the terminal equipment including the apparatus as described in the embodiment of the first aspect of this disclosure, the first network device including the apparatus as described in the embodiment of the third aspect of this disclosure, the second network device including the apparatus as described in the embodiment of the second aspect of this disclosure, the third network device being a descendant node of a first IAB-node, and the terminal equipment being a terminal equipment served by the descendant node of the first IAB-node.

According to a tenth aspect of the embodiments of this disclosure, there is provided a communication system, including a first network device, a second network device, a third network device and a terminal equipment, the terminal equipment including the apparatus as described in the embodiment of the first aspect of this disclosure, the first network device including the apparatus as described in the embodiment of the third aspect of this disclosure, the second network device including the apparatus as described in the embodiment of the second aspect of this disclosure, the third network device being a descendant node of a first IAB-node, and the terminal equipment being a terminal equipment served by the first IAB-node.

According to an eleventh aspect of the embodiments of this disclosure, there is provided a migration method for an IAB-node, applicable to a first terminal equipment, the first terminal equipment including a terminal equipment served by a first IAB-node and/or a terminal equipment served by a descendant IAB-node of the first IAB-node, the method including: storing first configuration information, the first configuration information including security configuration configured by a target IAB donor node; and applying the security configuration in the stored first configuration information when first indication information is obtained or the security configuration in the stored first configuration information includes security configuration corresponding to a selected or reselected cell.

According to a twelfth aspect of the embodiments of this disclosure, there is provided a migration method for an IAB-node, applicable to a first IAB-node, the method including: transmitting first configuration information to a terminal equipment served by the first IAB-node and/or a descendant IAB-node of the first IAB-node, the first configuration information including security configuration configured by a target IAB donor node; and transmitting first indication information to the terminal equipment and/or the descendant IAB-node, the first indication information being used for indicating that a first terminal equipment applies the security configuration in the first configuration information, the first terminal equipment including the terminal equipment served by the first IAB-node and/or a terminal equipment served by the descendant IAB-node of the first IAB-node.

According to a thirteenth aspect of the embodiments of this disclosure, there is provided a migration method for an IAB-node, applicable to a first IAB donor node, the first IAB donor node being a source IAB donor node of a first IAB-node, the method including: transmitting first configuration information to the first IAB-node, the first configuration information including security configuration configured by a target IAB donor node; and transmitting third indication information to the target IAB donor node, the third indication information being used for indicating that the first terminal equipment applies the security configuration in the first configuration information, the first terminal equipment including a terminal equipment served by the first IAB-node and/or a terminal equipment served by a descendant IAB-node of the first IAB-node.

According to a fourteenth aspect of the embodiments of this disclosure, there is provided a computer readable program, which, when executed in a migration apparatus for an IAB-node or a terminal equipment, will cause the migration apparatus for an IAB-node or the terminal equipment to carry out the migration method for an IAB-node as described in the seventh aspect of the embodiment of this disclosure.

According to an fifteenth aspect of the embodiments of this disclosure, there is provided a computer readable medium, including a computer readable program, which will cause a migration apparatus for an IAB-node or a terminal equipment to carry out the migration method for an IAB-node as described in the seventh aspect of the embodiment of this disclosure.

According to a sixteenth aspect of the embodiments of this disclosure, there is provided a computer readable program, which, when executed in a migration apparatus for an IAB-node or a network device, will cause the migration apparatus for an IAB-node or the network device to carry out the migration method for an IAB-node as described in the eighth or ninth aspect of the embodiment of this disclosure.

According to a seventeenth aspect of the embodiments of this disclosure, there is provided a computer readable medium, including a computer readable program, which will cause a migration apparatus for an IAB-node or a network device to carry out the migration method for an IAB-node as described in the eighth or ninth aspect of the embodiment of this disclosure.

An advantage of the embodiments of this disclosure exists in that the terminal equipment applies the security configuration in the stored first configuration information when the first indication information is obtained or the security configuration in the stored first configuration information includes security configuration corresponding to a selected or reselected cell. Thus, it may be ensured that the terminal equipment is able to apply correct security configuration, and interruption of services of the terminal equipment may be reduced.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of an overall architecture of IAB of an embodiment of this disclosure;
FIG. 2 is another schematic diagram of the overall architecture of the IAB of the embodiment of this disclosure;
FIG. 3 is a schematic diagram of a protocol stack of an F1-U interface between an IAB-DU and an IAB-donor-CU;
FIG. 4 is a schematic diagram of a protocol stack of an F1-C interface between an IAB-DU and an IAB-donor-CU;
FIG. 5 is a schematic diagram of a protocol stack of an SRB between an IAB-MT and an IAB-donor-CU of the embodiment of this disclosure;
FIG. 6 is a schematic diagram of a scenario of intra-IAB-donor-CU migration or topology adaptation of an IAB-node of the embodiment of this disclosure;
FIG. 7 is a schematic diagram of a scenario of inter-IAB-donor-CU migration or topology adaptation of an IAB-node of the embodiment of this disclosure;
FIG. 8 is a schematic diagram of an existing signaling process of inter-IAB-donor-CU migration or topology adaptation of an IAB-node;
FIG. 9 is a schematic diagram of the migration method for an IAB-node of Embodiment 1 of this disclosure;
FIG. 10 is a schematic diagram of the migration method for an IAB-node of Embodiment 1 of this disclosure;
FIG. 11 is a schematic diagram of the migration method for an IAB-node of Embodiment 2 of this disclosure;
FIG. 12 is a schematic diagram of the migration method for an IAB-node of Embodiment 3 of this disclosure;
FIG. 13 is a schematic diagram of the migration method for an IAB-node of Embodiment 4 of this disclosure;
FIG. 14 is a schematic diagram of the migration method for an IAB-node of Embodiment 5 of this disclosure;
FIG. 15 is a schematic diagram of the migration method for an IAB-node of Embodiment 6 of this disclosure;
FIG. 16 is a schematic diagram of the migration apparatus for an IAB-node of Embodiment 7 of this disclosure;
FIG. 17 is another schematic diagram of the migration apparatus for an IAB-node of Embodiment 7 of this disclosure;
FIG. 18 is a schematic diagram of the migration apparatus for an IAB-node of Embodiment 8 of this disclosure;
FIG. 19 is a schematic diagram of the migration apparatus for an IAB-node of Embodiment 9 of this disclosure;
FIG. 20 is a block diagram of a systematic structure of the terminal equipment of Embodiment 10 of this disclosure;
FIG. 21 is a block diagram of a systematic structure of the network device of Embodiment 11 of this disclosure;
FIG. 22 is a block diagram of a systematic structure of the network device of Embodiment 12 of this disclosure;
FIG. 23 is a schematic diagram of the communication system of Embodiment 13 of this disclosure;
FIG. 24 is another schematic diagram of the communication system of Embodiment 13 of this disclosure;
FIG. 25 is a further schematic diagram of the communication system of Embodiment 13 of this disclosure;
FIG. 26 is still another schematic diagram of the communication system of Embodiment 13 of this disclosure;
FIG. 27 is yet another schematic diagram of the communication system of Embodiment 13 of this disclosure;
FIG. 28 is yet further schematic diagram of the communication system of Embodiment 13 of this disclosure;
FIG. 30 is yet further another schematic diagram of the communication system of Embodiment 13 of this disclosure; and

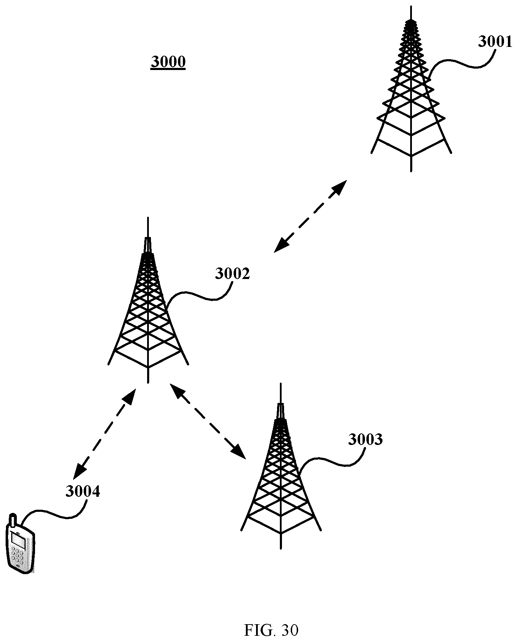

FIG. 30 is yet still another schematic diagram of the communication system of Embodiment 13 of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

In the embodiments of this disclosure, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (LTE)" refers to, for example, an equipment accessing to a communication network and receiving network services via a network device, and may also be referred to as "a terminal equipment (TE)", such as a terminal equipment in an IAB architecture served by an IAB-node or an IAB donor.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, all of "when...", "in a case where...", "for a case where..." and "if..." denote one or some conditions or states, and furthermore, all of these expressions are interchangeable.

Scenarios of the embodiments of this disclosure shall be described below by way of examples; however, this disclosure is not limited thereto.

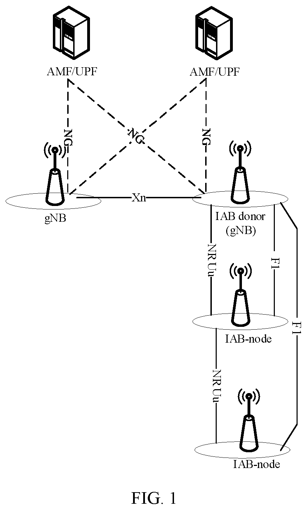

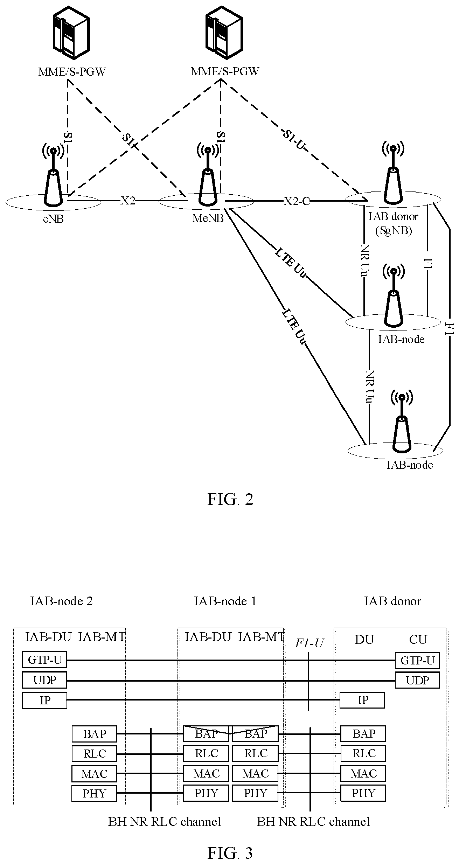

FIG. 1 is a schematic diagram of an overall architecture of an IAB in an embodiment of this disclosure. As shown in FIG. 1, the overall architecture of the IAB is in a duplex (SA) mode. FIG. 2 is another schematic diagram of the overall architecture of the IAB of the embodiment of this disclosure. As shown in FIG. 2, the overall architecture of the IAB is in a dual-connectivity (EN-DC) mode. In the dual-connectivity mode, the IAB-node is connected to an MeNB via E-UTRA, and an IAB donor terminates X2-C as an SgNB.

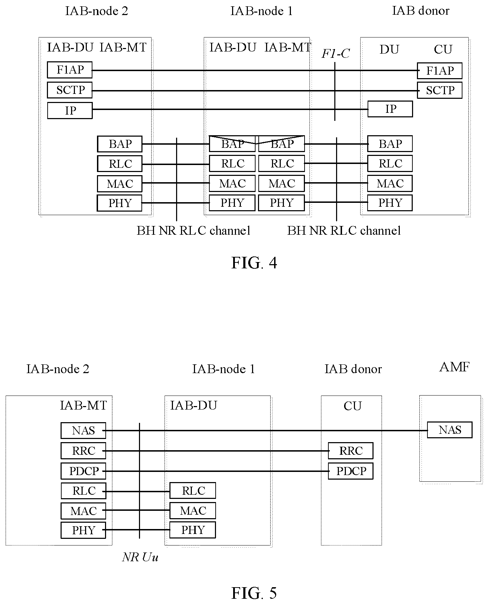

FIG. 3 is a schematic diagram of a protocol stack of an F1-U interface between an IAB-DU and an IAB-donor-CU, and FIG. 4 is a schematic diagram of a protocol stack of an F1-C interface between an IAB-DU and an IAB-donor-CU. In FIG. 3 and FIG. 4, F1-U and F1-C are illustrated by taking 2-hop backhaul as an example.

In the embodiment of this disclosure, F1-U and F1-C use an IP transmission layer between the IAB-DU and IAB-donor-CU. In addition, F1-U and F1-C have security protection.

In the embodiment of this disclosure, the IP layer transmits via a backhaul adaptation protocol (BAP) sublayer on wireless backhaul to ensure multi-hop routing; and the IP layer may also be used for non-F 1 services, such as operation administration and maintenance (OAM) services.

In the embodiment of this disclosure, BAP PDUs are transmitted via BH RLC channels on each backhaul link, and on each BH link, multiple BH RLC channels may be configured to allow traffic prioritization and QoS (quality of service) enforcement.

In the embodiment of this disclosure, each IAB-node and a BAP entity on the IAB-donor-DU perform mapping of the BH RLC channels of the BAP PDUs.

In the embodiment of this disclosure, the IAB-MT and IAB-donor-CU establish SRBs for carrying RRC and NAS. FIG. 5 is a schematic diagram of a protocol stack of the SRBs between the IAB-MT and the IAB-donor-CU of the embodiment of this disclosure.

In the embodiment of this disclosure, for the IAB-node operating in the EN-DC mode, the IAB-MT also establishes one or more DRBs with the IAB-donor-CU, which may be used to transmit OAM services, for example. For the SA mode, establishment of DRBs is optional. These SRBs and DRBs are transmitted between the IAB-MT and its parent node via a Uu interface channel.

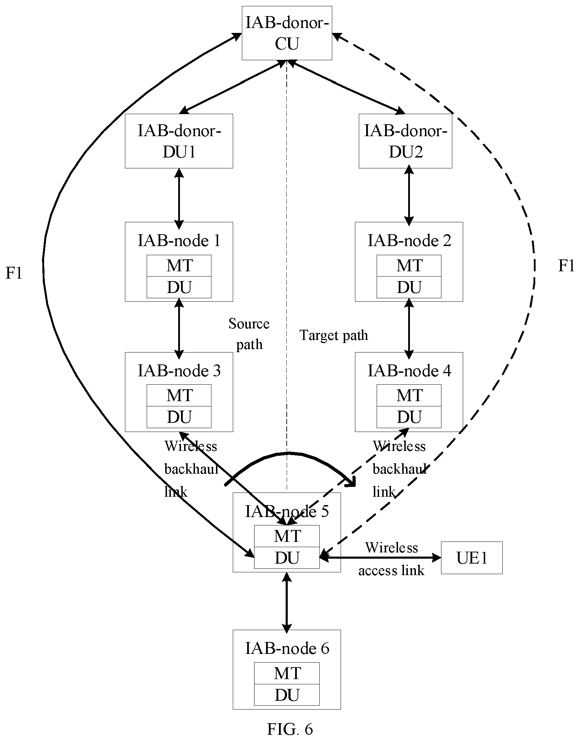

FIG. 6 is a schematic diagram of a scenario of intra-IAB-donor-CU migration or topology adaptation of an IAB-node of the embodiment of this disclosure. As shown in FIG. 6, IAB-node 5 is a migrating IAB-node, IAB-node 3 is a source parent IAB-node of IAB-node 5, IAB-node 4 is a target parent IAB-node of IAB-node 5, and IAB-node 3 and IAB-node 4 are connected to identical IAB-donor-CUs and different IAB-donor-DUs. UE1 is a terminal equipment served by IAB-node 5, and IAB-node 6 is a descendant IAB-node served by IAB-node 5.

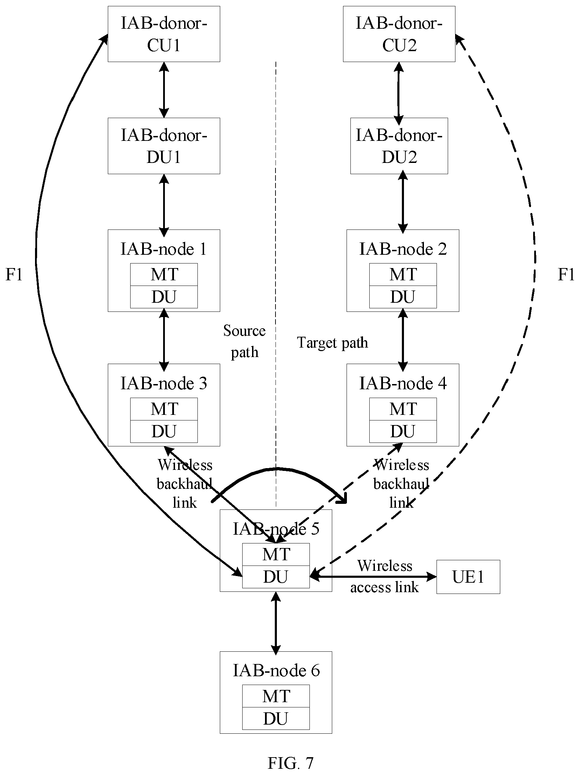

FIG. 7 is a schematic diagram of a scenario of inter-IAB-donor-CU migration or topology adaptation of an IAB-node of the embodiment of this disclosure. As shown in FIG. 7, IAB-node 5 is a migrating node, IAB-node 3 is a source parent IAB-node of IAB-node 5, IAB-node 4 is a target parent IAB-node of IAB-node 5, and IAB-node 3 and IAB-node 4 are connected to different IAB-donor-CUs and different IAB-donor-DUs. UE1 is a terminal equipment served by IAB-node 5, and IAB-node 6 is a descendant IAB-node served by IAB-node 5.

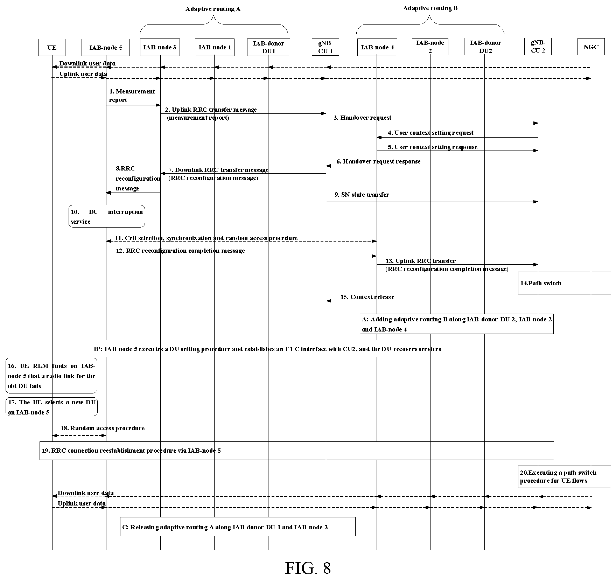

FIG. 8 is a schematic diagram of an existing signaling process of inter-IAB-donor-CU migration or topology adaptation of an IAB-node. As shown in FIG. 8, for stage (1) in the process of inter-IAB-donor-CU migration or topology adaptation of an IAB-node described above, i.e. migrating the IAB-MT of the migrating IAB-node, it at least includes steps 7-15 in FIG. 8; for stage (2), i.e. migrating the IAB-DU in the migrating IAB-node, it at least includes step A and step B; and for stage (3), i.e. migrating the terminal equipment served by the IAB-node and the descendant IAB-nodes served by the IAB-node, i.e. migrating IAB-MTs of the descendant nodes, it at least includes steps 16-20.

If stage (1) is executed first, i.e. steps 7-13 in FIG. 8, after the IAB-MT is switched to the target path, the IAB-donor-CU uses a message (such as an RRC reconfiguration message) protected by a new key of the target IAB donor to configure a new key of the target IAB donor for the terminal equipment, the terminal equipment is unable to obtain the message via an old key of a source IAB donor, which may result in a failure of integrity verification, thereby triggering connection reestablishment.

Various implementations of the embodiments of this disclosure shall be described below with reference to the accompanying drawings. These implementations are illustrative only, and are not intended to limit this disclosure.

### Embodiment 1

The embodiment of this disclosure provides a migration method for an IAB-node, applicable to a first terminal equipment, the first terminal equipment including a terminal equipment served by a first IAB-node and/or a terminal equipment served by a descendant IAB-node of the first IAB-node.

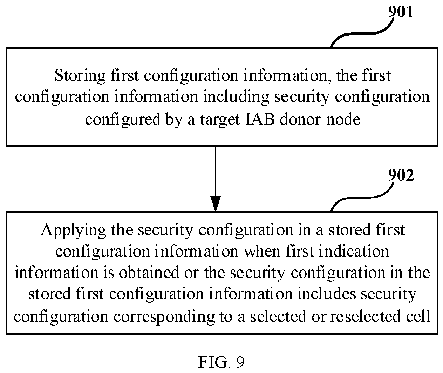

FIG. 9 is a schematic diagram of the migration method for an IAB-node of Embodiment 1 of this disclosure. As shown in FIG. 9, the method includes:
step 901: storing first configuration information, the first configuration information including security configuration configured by a target IAB donor node; and
step 902: applying the security configuration in a stored first configuration information when first indication information is obtained or the security configuration in the stored first configuration information includes security configuration corresponding to a selected or reselected cell.

Hence, the terminal equipment may be ensured to correctly apply the security configuration, and interruption of the services of the terminal equipment may be reduced.

In the embodiment of this disclosure, the first IAB-node is a migrating IAB-node.

In the embodiment of this disclosure, the first terminal equipment includes a terminal equipment served by the first IAB-node and/or a terminal equipment served by a descendant IAB-node of the first IAB-node. The terminal equipment served by the first IAB-node may be at least one terminal equipment, the descendant IAB-node of the first IAB-node may be at least one descendant node, and the terminal equipment served by the descendant IAB-node of the first IAB-node may be at least one terminal equipment.

In step 901, the first terminal equipment stores the first configuration information, and in the embodiment of this disclosure, the first configuration information may be included in a first RRC message.

In the embodiment of this disclosure, the first RRC message may come from the first IAB-node; for example, the first IAB-node transmits the first RRC message to the terminal equipment served by the first IAB-node, and/or the first IAB-node transmits the first RRC message to the descendant IAB-node of the first IAB-node, and then the descendant IAB-node transmits the first RRC message to the terminal equipment served by the descendant IAB-node.

In the embodiment of this disclosure, for example, the first RRC message is used to carry configuration information from the target IAB donor, the configuration information being a migration configuration message, or a security update message, or an RRC reconfiguration message. The migration configuration message and the security update message are new messages and may be in other names, and names of messages including the first configuration information are not limited in the embodiment of this disclosure.

In the embodiment of this disclosure, the first RRC message may further include second indication information, the second indication information being used for indicating that the first terminal equipment stores the first RRC message or a part of configurations in the first RRC message or the first configuration information including the security configuration. That is, the second indication information is used for indicating that the first terminal equipment stores the first RRC message or a part of configurations in the first RRC message or the first configuration information including the security configuration, rather than immediately applies the message or information.

In the embodiment of this disclosure, the first configuration information includes security configuration configured by the target IAB donor node.

In the embodiment of this disclosure, the security configuration may include at least one of an encryption algorithm and a corresponding key, an integrity algorithm and a corresponding key.

In the embodiment of this disclosure, the security configuration configured by the target IAB donor node may be transmitted by the target IAB donor node to the first IAB-node via the source IAB donor node.

In the embodiment of this disclosure, the first configuration information may include at least one security configuration. For example, in a case where the first configuration information includes at least two security configurations, they may correspond to cell IDs or indices.

For example, the security configuration in the first configuration information includes a security configuration of a cell. For example, the security configuration in the first configuration information includes at least one entry, the at least one entry including a cell ID and a security configuration corresponding to the cell ID.

In the embodiment of this disclosure, for example, the first configuration information may further include a condition for applying the security configuration in the stored first configuration information and/or a valid time and/or area of the entry.

For example, the condition for applying the security configuration in the stored first configuration information is that the indication indicating applying the security configuration is an explicit and/or implicit indication, and/or the indication indicating applying the security configuration comes from the first IAB-node and/or from the IAB donor node.

For example, when the condition is an explicit indication, in step 902, the stored security configuration is applied only when the obtained first indication information is an explicit indication or the explicitly indicated first indication information is obtained;
for another example, when the condition is that the indication comes from the first IAB-node, in step 902, the stored security configuration is applied only when the obtained first indication information is from the first IAB-node or the indication from the first IAB-node is obtained.

For example, the time for applying the security configuration in the stored first configuration information may start from receiving the security configuration by the terminal equipment and take a configured time length as the valid time;
for example, the area for applying the security configuration in the stored first configuration information may be a cell ID of a cell providing services for the terminal equipment, and if the cell ID of the serving cell is included in configuration of a cell ID for determining a valid area, the terminal equipment deems that this entry is valid; otherwise, it deems that this entry is invalid or removes this entry.

In step 902, when the first indication information is obtained, or when the security configuration in the stored first configuration information includes a security configuration corresponding to a selected or reselected cell, the security configuration in the stored first configuration information is applied.

In the embodiment of this disclosure, for example, when there is only one security configuration in the stored first configuration information, when the obtained first indication information or corresponding security configuration of the selected or reselected cell is the stored security configuration, the stored security configuration is applied;
when there are multiple security configurations in the stored first configuration information, the security configuration corresponding to the cell ID in the stored security configuration may be applied according to the cell ID indicated by the first indication information or the ID of the selected or reselected cell by setting a correspondence between the cell ID and the multiple security configurations;
and furthermore, a security configuration corresponding to an index in the stored security configuration may be applied according to the index indicated by the first indication information by setting a correspondence between stored first configuration information and the multiple security configurations;
or, the first indication information indicates an index, while corresponding security configurations sequentially arranged in the security configuration applied, that is, the security configuration does not explicitly indicate an index for a security configuration, it is only deemed that an indicated first index is 0, an indicated second index is 1, and so on.

A case where the security configuration is applied according to the first indication information shall be described first.

In the embodiment of this disclosure, the first indication information may be provided explicitly or implicitly.

In the embodiment of this disclosure, the first indication information may be provided by the first IAB-node, or may be provided by a source IAB donor node of the first IAB-node.

In the embodiment of this disclosure, the source IAB donor node is also referred to as a source IAB donor, which represents an endpoint of backhaul of a network side on a source path, and the target IAB donor node is also referred to as a target IAB donor, which represents an endpoint of the backhaul of the network side on a target path.

For example, the first indication information is provided explicitly by the first IAB-node, such as being provided by an IAB-DU of the first IAB-node. For example, the first indication information is included in an L1 indication message or an MAC indication message.

The case where the first indication information is included in the L1 indication message shall be described below.

For example, the L1 indication message reuses a short message of a paging message. For example, an idle bit in the short message is used to indicate applying the security configuration in the stored first configuration information.

For example, the short message consists of 8 bits, in which 6 bits are idle, and one idle bit therein is used to indicate applying the security configuration in the stored first configuration information. For example, a value of the one idle bit being 1 indicates applying the security configuration, and a value of the one idle bit being 0 indicates not applying the security configuration or deeming that the security configuration is invalid or removed.

For example, any one or more of bit 4 or bits 5-8 is/are used to indicate applying the security configuration in the stored first configuration information.

For example, for a case where an existing idle bit is used to indicate, when the bit is set to be of 1, it indicates applying the security configuration in the stored first configuration information, and when the bit is set to be of 0, it indicates not applying the security configuration or removing the security configuration; and other existing idle bits are not used, and shall be ignored by the terminal if they are received.

For example, for a case where multiple bits are used to indicate, one bit corresponds to a security configuration. If one of the multiple bits is set to be of 1, it indicates applying a security configuration corresponding to the bit, and if the bit is set to be of 0, it indicates not applying the security configuration corresponding to the bit or removing the security configuration corresponding to the bit; and other existing idle bits are not used, and shall be ignored when they are received by the terminal.

In addition, a name of a bit used for indication may be applyStoredConfig, which is an exemplary name, and specific names are not limited in the embodiment of this disclosure.

In the embodiment of this disclosure, when the short message is associated with a paging message, a terminal equipment ID is included in the paging message and the short message indicates applying the security configuration in the stored first configuration information, the first terminal equipment applies the security configuration in the stored first configuration information.

For another example, existing one or more idle bits in the short message indicate(s) applying an index of the security configuration in the stored first configuration information; and other existing idle bits are not used, and shall be ignored when they are received by the terminal.

For example, the short message consists of 8 bits, in which 6 bits are idle, and one idle bit therein is used to indicate applying an index of the security configuration in the stored first configuration information.

For example, 2 bits are used to indicate, and may control 4 indices;
for example, the two bits indicate 00, indicating applying a security configuration with index=0 or a first security configuration, indicate 01, indicating applying a security configuration with index=1 or a second security configuration, indicate 10, indicating applying a security configuration with index=2 or a third security configuration, indicate 11, indicating applying a security configuration with index=3 or a fourth security configuration; and other existing idle bits are not used, and shall be ignored when they are received by the terminal.

For another example, the two bits indicate 11, indicating applying a security configuration with index=0 or a first security configuration, indicate 10, indicating applying a security configuration with index=1 or a second security configuration, indicate 01, indicating applying a security configuration with index=2 or a third security configuration, indicate 00, indicating applying a security configuration with index=3 or a fourth security configuration; and other existing idle bits are not used, and shall be ignored when they are received by the terminal.

In the embodiment of this disclosure, when the short message is associated with a paging message, a terminal equipment ID is included in the paging message and the short message indicates applying an index of the security configuration in the stored first configuration information, the first terminal equipment applies a security configuration to which the index of the security configuration in the stored first configuration information corresponds.

A case where the first indication information is included in the MAC indication message shall be described below.

For example, the MAC indication message indicates via an MAC CE whether to apply the security configuration in the stored first configuration information or indicates a cell ID.

For example, one bit in the MAC CE is used to indicate whether to apply the security configuration to which the bit corresponds in the stored first configuration information. For example, this bit may explicitly or implicitly correspond to the security configuration.

For example, for the case of explicitly corresponding, a corresponding security configuration is determined according to an explicit index;
for example, for the case of implicitly corresponding, a security configuration to which the bit corresponds is determined according to an order of occurrence of the bit in the first configuration information.

For example, a value of 1 of the bit indicates applying, and a value of 0 of the bit indicates not applying or removing.

For another example, when the MAC CE includes a cell ID, a security configuration in the stored first configuration information corresponding to the cell ID is applied. For example, the cell ID is used to uniquely determine a cell within a public land mobile network (PLMN).

The case where the first indication information is provided explicitly by the first IAB-node is described above, and a case where the first indication information is explicitly provided by the source IAB donor node of the first IAB-node shall be described below.

In the embodiment of this disclosure, the first indication information may be transmitted to the first terminal equipment by the source IAB donor node of the first IAB-node via the target IAB donor node of the first IAB-node and the first IAB-node.

For example, the first indication information is transmitted by the source IAB donor node of the first IAB-node to the target IAB donor node of the first IAB-node via an Xn interface or an NG interface, and is transmitted by the target IAB donor node to the first IAB-node via an F 1 interface.

In the embodiment of this disclosure, the first indication information may be included in a system message or a terminal equipment-specific dedicated message.

For example, for the case where the first indication information is included in the system message, when the network device includes the first indication information in the system message, the first terminal equipment applies the security configuration in the stored first configuration information, otherwise, it does not apply the security configuration; or, when the network device includes a cell ID in the system message, the first terminal equipment applies a security configuration in the security configuration in the stored first configuration information corresponding to the cell ID.

For example, for the case where the first indication information is included in the terminal equipment-specific dedicated message, the dedicated message is, for example, an RRC reconfiguration message. For example, when the network device includes the first indication information in the RRC reconfiguration message, the first terminal equipment applies the security configuration in the stored first configuration information, otherwise, it does not apply the security configuration; or, when the network device includes a cell ID in the RRC reconfiguration message, the first terminal equipment applies a security configuration in the security configuration in the stored first configuration information corresponding to the cell ID.

Furthermore, the first indication information may also be provided implicitly. For example, the first indication information is provided implicitly when a cell ID change of identical physical cell IDs (PCIs) detected by the first terminal equipment.

The case where the security configuration is applied according to the first indication information is described above, and applying a security configuration according to a selected or reselected cell shall be described below.

In the embodiment of this disclosure, for the case where the security configuration is applied according to the selected or reselected cell, when the security configuration in the stored first configuration information includes a security configuration corresponding to the selected or reselected cell, the first terminal equipment applies the security configuration corresponding to the selected or reselected cell in the security configuration in the stored first configuration information.

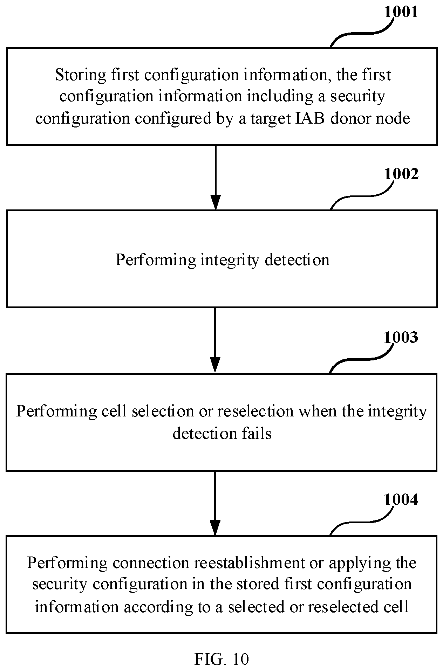

FIG. 10 is a schematic diagram of the migration method for an IAB-node of Embodiment 1 of this disclosure. As shown in FIG. 10, the method includes:
step 1001: storing first configuration information, the first configuration information including a security configuration configured by a target IAB donor node;
step 1002: performing integrity detection;
step 1003: performing cell selection or reselection when the integrity detection fails; and
step 1004: performing connection reestablishment or applying the security configuration in the stored first configuration information according to a selected or reselected cell.

In step 1004, for example, when the security configuration in the stored first configuration information includes a security configuration corresponding to the selected or reselected cell, the first terminal equipment applies a security configuration in the security configuration in the stored first configuration information corresponding to the selected or reselected cell, and when the security configuration in the stored first configuration information does not include a security configuration corresponding to the selected or reselected cell, the first terminal equipment performs connection reestablishment.

In the embodiment of this disclosure, the selected or reselected cell is identical to the cell where the integrity detection fails or is an intra-frequency cell of the cell where the integrity detection fails, or, the selected or reselected cell is an inter-frequency cell of the cell where the integrity detection fails.

In the embodiment of this disclosure, when the first configuration information is received and the first configuration information includes a security configuration or a first cell ID of a first cell, and an integrity detection failure occurs in the first cell, the first terminal equipment does not deem that the cell or a frequency of the cell is barred, or, the first terminal equipment takes the cell or an intra-frequency cell as a candidate cell for cell selection or reselection.

In the embodiment of this disclosure, the first terminal equipment may transmit a first RRC reconfiguration completion message protected by using a security configuration configured by the source IAB donor node, and/or, transmit a second RRC reconfiguration completion message protected by using a security configuration configured by the target IAB donor node.

It can be seen from the above embodiment that when the first indication information is obtained, or when the security configuration in the stored first configuration information includes a security configuration corresponding to the selected or reselected cell, the terminal equipment applies the security configuration in the stored first configuration information, which may ensure that the terminal equipment may apply a correct security configuration, and reduce interruption of services of the terminal equipment.

### Embodiment 2

The embodiment of this disclosure provides a migration method for an IAB-node, applicable to a first IAB-node. This method corresponds to Embodiment 1, and reference may be made to Embodiment 1 for identical contents.

In the embodiment of this disclosure, the first IAB-node is a migrating IAB-node.

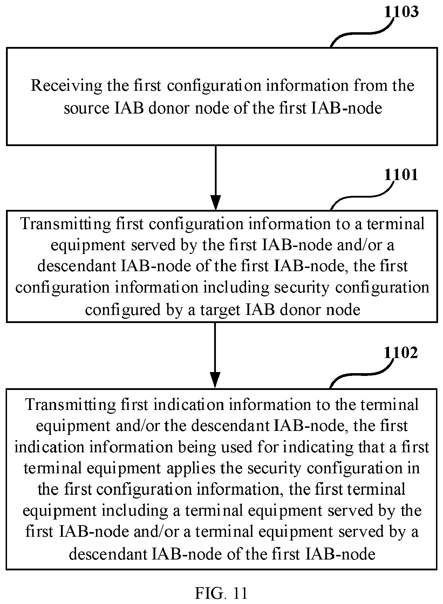

FIG. 11 is a schematic diagram of the migration method for an IAB-node of Embodiment 2 of this disclosure. As shown in FIG. 11, the method includes:
step 1101: transmitting first configuration information to a terminal equipment served by the first IAB-node and/or a descendant IAB-node of the first IAB-node, the first configuration information including security configuration configured by a target IAB donor node; and
step 1102: transmitting first indication information to the terminal equipment and/or the descendant IAB-node, the first indication information being used for indicating that a first terminal equipment applies the security configuration in the first configuration information, the first terminal equipment including a terminal equipment served by the first IAB-node and/or a terminal equipment served by a descendant IAB-node of the first IAB-node.

In the embodiment of this disclosure, the first indication information is provided explicitly by the first IAB-node.

In the embodiment of this disclosure, the first indication information may be included in an L1 indication message or an MAC indication message.

For example, the L1 indication message reuses a short message of a paging message.

For example, one idle bit in the short message is used to indicate applying the security configuration in the stored first configuration information.

For example, when the short message is associated with a paging message, a terminal equipment ID is included in the paging message and the short message indicates applying the security configuration in the stored first configuration information, the first terminal equipment applies the security configuration in the stored first configuration information.

For example, an idle bit in the short message indicates applying an index of the security configuration in the stored first configuration information.

For example, when the short message is associated with a paging message, a terminal equipment ID is included in the paging message and the short message indicates applying the index of the security configuration in the stored first configuration information, the first terminal equipment applies a security configuration to which the index of the security configuration in the stored first configuration information corresponds.

For example, the MAC indication message indicates via an MAC CE whether to apply the security configuration in the stored first configuration information or indicates a cell ID.

For example, one bit in the MAC CE is used to indicate whether to apply the security configuration in the stored first configuration information.

For example, when the MAC CE includes a cell ID, a security configuration corresponding to the cell ID in the stored first configuration information is applied.

For example, the first indication information is provided implicitly by changing the cell ID by using identical physical cell identifiers (PCIs).

In the embodiment of this disclosure, when a cell ID is configured via operation administration and maintenance (OAM) or signaling and the cell ID is different from a previous cell ID, the new cell ID is applied. The application of the new cell ID includes that system information and an RRC dedicated message include the new cell ID.

In the embodiment of this disclosure, for example, as shown in FIG. 11, the method further includes:
step 1103: receiving the first configuration information from the source IAB donor node of the first IAB-node.

In the embodiment of this disclosure, the first configuration information may be included in a first RRC message.

For example, the first RRC message is a migration configuration message, or a security update message, or an RRC reconfiguration message.

In the embodiment of this disclosure, the first RRC message may include second indication information, the second indication information being used for indicating that the first terminal equipment and/or a terminal equipment served by a descendant node of the first IAB-node store(s) the first RRC message or a part of configurations in the first RRC message or the first configuration information including the security configuration.

In the embodiment of this disclosure, the security configuration in the first configuration information may include a security configuration of a cell.

In the embodiment of this disclosure, the security configuration in the first configuration information may include at least one entry, the entry including a cell ID and a security configuration corresponding to the cell ID.

In the embodiment of this disclosure, the first configuration information may further include a condition for applying the security configuration in the stored first configuration information and/or a valid time and/or area of the entry.

In this embodiment, reference may be made to the contents described in Embodiment 1 for contents identical to those in Embodiment 1, which shall not be described herein any further.

It can be seen from the above embodiment that when the first indication information is obtained, or when the security configuration in the stored first configuration information includes a security configuration corresponding to the selected or reselected cell, the terminal equipment applies the security configuration in the stored first configuration information, which may ensure that the terminal equipment may apply a correct security configuration, and reduce interruption of services of the terminal equipment.

### Embodiment 3

The embodiment of this disclosure provides a migration method for an IAB-node, applicable to a first IAB donor node, the first IAB donor node being a source IAB donor node of the first IAB-node. This method corresponds to Embodiment 1, and reference may be made to Embodiment 1 for identical contents.

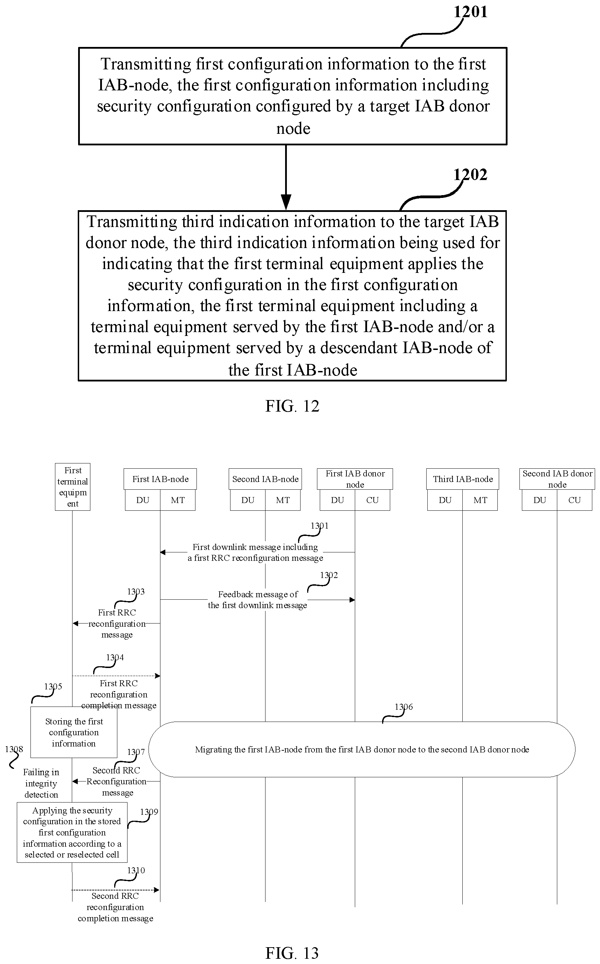

FIG. 12 is a schematic diagram of the migration method for an IAB-node of Embodiment 3 of this disclosure. As shown in FIG. 12, the method includes at least one of the following steps:
step 1201: transmitting first configuration information to the first IAB-node, the first configuration information including security configuration configured by a target IAB donor node; and
step 1202: transmitting third indication information to the target IAB donor node, the third indication information being used for indicating that the first terminal equipment applies the security configuration in the first configuration information, the first terminal equipment including a terminal equipment served by the first IAB-node and/or a terminal equipment served by a descendant IAB-node of the first IAB-node.

In the embodiment of this disclosure, the third indication information may be transmitted to the first terminal equipment by the source IAB donor node of the first IAB-node via the target IAB donor node and the first IAB-node.

For example, the third indication information is transmitted by the source IAB donor node of the first IAB-node to the target IAB donor node via an Xn interface or an NG interface, and is transmitted by the target IAB donor node to the first IAB-node via an F1 interface.

For example, the third indication information is included in a system message or a terminal equipment-specific dedicated message.

In the embodiment of this disclosure, when the network device includes an indication in the system message, the first terminal equipment applies the security configuration; or, when the network device includes a cell ID in the system message, the first terminal equipment applies a corresponding configuration of the cell in the security configuration.

In step 1201, for example, first configuration information is transmitted to the first IAB-node via the Xn interface or the NG interface.

In the embodiment of this disclosure, the first configuration information may be included in a first RRC message.

For example, the first RRC message is a migration configuration message, or a security update message, or an RRC reconfiguration message.

In the embodiment of this disclosure, the first RRC message may include second indication information, the second indication information being used for indicating that the first terminal equipment stores the first RRC message or a part of configurations in the first RRC message or the first configuration information including the security configuration.

In the embodiment of this disclosure, the security configuration in the first configuration information may include security configuration of a cell.

For example, the security configuration in the first configuration information includes at least one entry, the entry including a cell ID and a security configuration corresponding to the cell ID.

In the embodiment of this disclosure, for example, the first configuration information may further include a condition for applying the security configuration in the stored first configuration information and/or a valid time and/or area of the entry.

In this embodiment, reference may be made to the contents described in Embodiment 1 for contents identical to those in Embodiment 1, which shall not be described herein any further.

It can be seen from the above embodiment that when the first indication information is obtained, or when the security configuration in the stored first configuration information includes a security configuration corresponding to the selected or reselected cell, the terminal equipment applies the security configuration in the stored first configuration information, which may ensure that the terminal equipment may apply a correct security configuration, and reduce interruption of services of the terminal equipment.

### Embodiment 4

The embodiment of this disclosure provides a migration method for an IAB-node, applicable to a first terminal equipment, a first IAB-node and a first IAB donor node, the first IAB donor node being a source IAB donor node of the first IAB-node. This method corresponds to embodiments 1-3, and reference may be made to embodiments 1-3 for identical contents.

In the embodiment of this disclosure, a second IAB donor node is a target IAB donor node of the first IAB donor node, a second IAB-node is a source parent IAB-node of the first IAB donor node, and a third IAB-node is a target parent IAB-node of the first IAB donor node.

FIG. 13 is a schematic diagram of the migration method for an IAB-node of Embodiment 4 of this disclosure. As shown in FIG. 13, the method includes:
step 1301: transmitting a first downlink message including a first RRC reconfiguration message by the first IAB donor node to the first IAB-node, the first RRC reconfiguration message including first configuration information, the first configuration information including a security configuration configured by the second IAB donor node;
step 1302: transmitting a feedback message of the first downlink message by the first IAB-node to the first IAB donor node;
step 1303: transmitting a first RRC reconfiguration message by the first IAB-node to the first terminal equipment;
step 1304: transmitting a first RRC reconfiguration completion message by the first terminal equipment to the first IAB-node, the first RRC reconfiguration completion message being protected by using a security configuration configured by the first IAB donor node;
step 1305: storing the first configuration information by the first terminal equipment;
step 1306: migrating the first IAB-node from the first IAB donor node to the second IAB donor node;
step 1307: transmitting a second RRC reconfiguration message by the first IAB-node to the first terminal equipment;
step 1308: failing in integrity detection by the first terminal equipment;
step 1309: applying the security configuration in the stored first configuration information according to a selected or reselected cell; and
step 1310: transmitting a second RRC reconfiguration completion message by the first terminal equipment to the first IAB-node, the second RRC reconfiguration completion message being protected by using the security configuration configured by the second IAB donor node.

In the embodiment of this disclosure, steps 1304 and 1310 are optional.

In the embodiment of this disclosure, an order of execution of steps 1302 and 1303 are not limited, and an order of execution of steps 1304 and 1305 are not limited.

It can be seen from the above embodiment that when the first terminal equipment receives the data or messages from the first IAB-node, because these data or messages use a new security configuration, i.e. the security configuration configured by the second IAB donor node, the first terminal equipment may possibly fail in integrity detection, thereby triggering cell reselection or selection. In this case, if the corresponding security configuration of the reselected or selected cell is already stored in the first terminal equipment, the first terminal equipment does not need to perform connection reestablishment, but applies the stored security configuration. In this way, it may be ensured that the terminal equipment may apply a correct security configuration, and interruption of services of the terminal equipment may be reduced.

### Embodiment 5

The embodiment of this disclosure provides a migration method for an IAB-node, applicable to a first terminal equipment, a first IAB-node and a first IAB donor node, the first IAB donor node being a source IAB donor node of the first IAB-node. This method corresponds to embodiments 1-3, and reference may be made to embodiments 1-3 for identical contents.

In the embodiment of this disclosure, a second IAB donor node is a target IAB donor node of the first IAB donor node, a second IAB-node is a source parent IAB-node of the first IAB node, and a third IAB-node is a target parent IAB-node of the first IAB node.

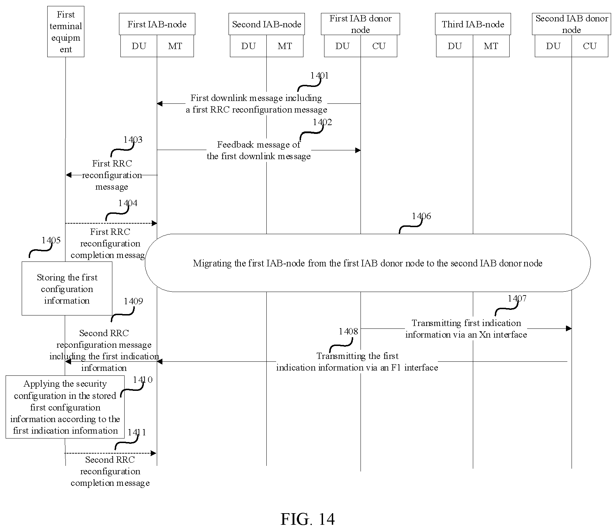

FIG. 14 is a schematic diagram of the migration method for an IAB-node of Embodiment 5 of this disclosure. As shown in FIG. 14, the method includes:
step 1401: transmitting a first downlink message including a first RRC reconfiguration message by the first IAB donor node to the first IAB-node, the first RRC reconfiguration message including first configuration information, the first configuration information including a security configuration configured by the second IAB donor node;
step 1402: transmitting a feedback message of the first downlink message by the first IAB-node to the first IAB donor node;
step 1403: transmitting the first RRC reconfiguration message by the first IAB-node to the first terminal equipment;
step 1404: transmitting a first RRC reconfiguration completion message by the first terminal equipment to the first IAB-node, the first RRC reconfiguration completion message being protected by using a security configuration configured by the first IAB donor node;
step 1405: storing the first configuration information by the first terminal equipment;
step 1406: migrating the first IAB-node from the first IAB donor node to the second IAB donor node;
step 1407: transmitting first indication information by the first IAB donor node to the second IAB donor node via an Xn interface;
step 1408: transmitting the first indication information by the second IAB donor node to the first IAB-node via an F1 interface;
step 1409: transmitting a second RRC reconfiguration message including the first indication information by the first IAB-node to the first terminal equipment;
step 1410: applying the security configuration in the stored first configuration information by the first terminal equipment according to the first indication information; and
step 1411: transmitting a second RRC reconfiguration completion message by the first terminal equipment to the first IAB-node, the second RRC reconfiguration completion message being protected by using the security configuration configured by the second IAB donor node.

In the embodiment of this disclosure, steps 1404 and 1411 are optional.

In the embodiment of this disclosure, an order of execution of steps 1402 and 1403 are not limited, and an order of execution of steps 1404 and 1405 are not limited.

It can be seen from the above embodiment that after the cross-IAB-donor-CU migration or topology adaptation of the first IAB-node is completed, before releasing a context of the terminal equipment, the first IAB donor node provides an indication for the first terminal equipment, and the indication is submitted to the first terminal equipment via the second IAB donor node. In this way, it may be ensured that the terminal equipment may apply a correct security configuration, and interruption of services of the terminal equipment may be reduced.

### Embodiment 6

The embodiment of this disclosure provides a migration method for an IAB-node, applicable to a first terminal equipment, a first IAB-node and a first IAB donor node, the first IAB donor node being a source IAB donor node of the first IAB-node. This method corresponds to embodiments 1-3, and reference may be made to embodiments 1-3 for identical contents.

In the embodiment of this disclosure, a second IAB donor node is a target IAB donor node of the first IAB donor node, a second IAB-node is a source parent IAB-node of the first IAB node, and a third IAB-node is a target parent IAB-node of the first IAB node.

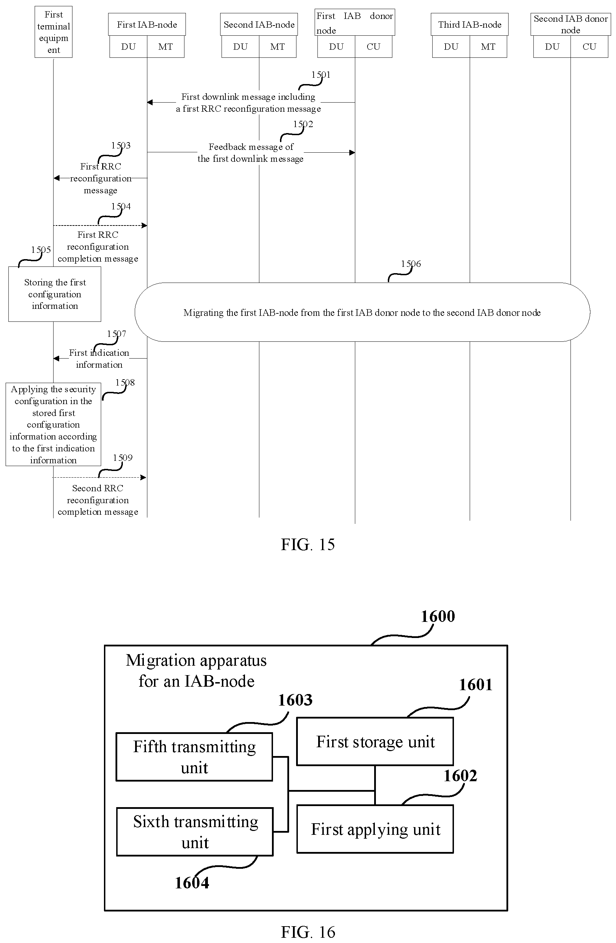

FIG. 15 is a schematic diagram of the migration method for an IAB-node of Embodiment 6 of this disclosure. As shown in FIG. 15, the method includes:
step 1501: transmitting a first downlink message including a first RRC reconfiguration message by the first IAB donor node to the first IAB-node, the first RRC reconfiguration message including first configuration information, the first configuration information including a security configuration configured by the second IAB donor node;
step 1502: transmitting a feedback message of the first downlink message by the first IAB-node to the first IAB donor node;
step 1503: transmitting the first RRC reconfiguration message by the first IAB-node to the first terminal equipment;
step 1504: transmitting a first RRC reconfiguration completion message by the first terminal equipment to the first IAB-node, the first RRC reconfiguration completion message being protected (encryption and integrity protection) by using a security configuration configured by the first IAB donor node;
step 1505: storing the first configuration information by the first terminal equipment;
step 1506: migrating the first IAB-node from the first IAB donor node to the second IAB donor node;
step 1507: transmitting first indication information by the first IAB donor node to the first terminal equipment;
step 1508: applying the security configuration in the stored first configuration information by the first terminal equipment according to the first indication information; and
step 1509: transmitting a second RRC reconfiguration completion message by the first terminal equipment to the first IAB-node, the second RRC reconfiguration completion message being protected by using the security configuration configured by the second IAB donor node.

In the embodiment of this disclosure, steps 1504 and 1509 are optional.

In the embodiment of this disclosure, an order of execution of steps 1502 and 1503 are not limited, and an order of execution of steps 1504 and 1505 are not limited.

It can be seen from the above embodiment that after the cross-IAB-donor-CU migration or topology adaptation of the first IAB-node is completed, the first IAB donor node provides an indication for the first terminal equipment to indicate that the first terminal equipment applies the security configuration in the stored first configuration information. In this way, it may be ensured that the terminal equipment may apply a correct security configuration, and interruption of services of the terminal equipment may be reduced.

### Embodiment 7

The embodiment of this disclosure provides a migration apparatus for an IAB-node, applicable to a first terminal equipment, the first terminal equipment including a terminal equipment served by a first IAB-node and/or a terminal equipment served by a descendant IAB-node of the first IAB-node. As a principle of the apparatus for solving problems is similar to that of the method in Embodiment 1, reference may be made to the implementation of the method in Embodiment 1 for implementation of the apparatus, with identical contents being not going to be repeated herein any further.

FIG. 16 is a schematic diagram of the migration apparatus for an IAB-node of Embodiment 7 of this disclosure. As shown in FIG. 16, an apparatus 1600 includes:
a first storage unit 1601 configured to store first configuration information, the first configuration information including security configuration configured by a target IAB donor node; and
a first applying unit 1602 configured to apply the security configuration in a stored first configuration information when first indication information is obtained or the security configuration in the stored first configuration information comprises security configuration corresponding to a selected or reselected cell.

In the embodiment of this disclosure, the first indication information is provided explicitly or implicitly.

For example, the first indication information is provided explicitly by the first IAB-node.

For example, the first indication information is included in an L1 indication message or an MAC indication message.

For example, the L1 indication message reuses a short message of a paging message.

For example, an idle bit in the short message is used to indicate applying the security configuration in the stored first configuration information.

For example, when the short message is associated with a paging message, a terminal equipment ID is included in the paging message and the short message indicates applying the security configuration in the stored first configuration information, the first applying unit applies the security configuration in the stored first configuration information.

For example, the idle bit in the short message indicates applying an index of the security configuration in the stored first configuration information.

For example, when the short message is associated with a paging message, a terminal equipment ID is included in the paging message and the short message indicates applying an index of the security configuration in the stored first configuration information, the first applying unit applies a security configuration to which the index of the security configuration in the stored first configuration information corresponds.

For example, the MAC indication message indicates whether to apply the security configuration in the stored first configuration information or indicates a cell ID via an MAC CE.

For example, one bit in the MAC CE is used to indicate whether to apply a security configuration corresponding to this bit in the stored first configuration information.

In the embodiment of this disclosure, when the MAC CE includes a cell ID, the first applying unit 1602 applies security configuration corresponding to the cell ID in the stored first configuration information.

For example, the first indication information is provided explicitly by a source IAB donor node of the first IAB-node.

For example, the first indication information is transmitted by the source IAB donor node of the first IAB-node to the first terminal equipment via a target IAB donor node of the first IAB-node and the first IAB-node.

For example, the first indication information is transmitted by the source IAB donor node of the first IAB-node to the target IAB donor node of the first IAB-node via an Xn interface or an NG interface, and is transmitted by the target IAB donor node to the first IAB-node via an F 1 interface.

For example, the first indication information is included in a system message or a terminal equipment-specific dedicated message.

For example, the first indication information is provided implicitly when a cell ID change of identical physical cell IDs (PCIs) detected by the first terminal equipment.

For example, the first configuration information is included in a first RRC message.

For example, the first RRC message includes second indication information, the second indication information being used for indicating that the first terminal equipment stores the first RRC message or a part of configurations in the first RRC message or the first configuration information including the security configuration.

For example, the first RRC message is a migration configuration message, or a security update message, or an RRC reconfiguration message.

For example, the security configuration in the first configuration information includes a security configuration of a cell.

For example, the security configuration in the first configuration information includes at least one entry, the entry including a cell ID and a security configuration corresponding to the cell ID.

In the embodiment of this disclosure, the first configuration information further includes a condition for applying the security configuration in the stored first configuration information and/or a valid time and/or area of the entry.

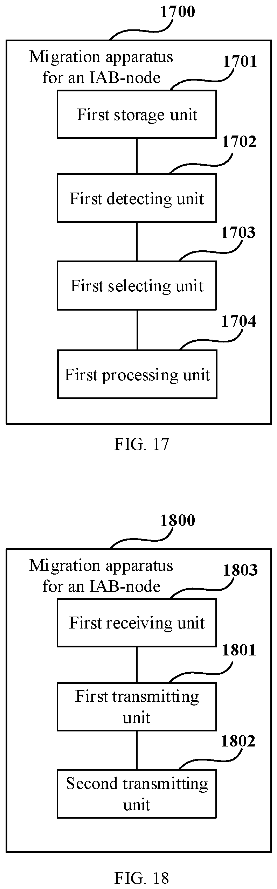

FIG. 17 is another schematic diagram of the migration apparatus for an IAB-node of Embodiment 7 of this disclosure. As shown in FIG. 17, an apparatus 1700 includes:
a first storage unit 1701 configured to store first configuration information, the first configuration information including security configuration configured by a target IAB donor node;
a first detecting unit 1702 configured to perform integrity detection;
a first selecting unit 1703 configured to perform cell selection or reselection when the integrity detection fails; and
a first processing unit 1704 configured to perform connection reestablishment or apply the security configuration in the first stored first configuration information according to a selected or reselected cell.

In the embodiment of this disclosure, the selected or reselected cell is identical to the cell where the integrity detection fails or is an intra-frequency cell of the cell where the integrity detection fails, or, the selected or reselected cell is an inter-frequency cell of the cell where the integrity detection fails.

For example, when the first configuration information is received and the first configuration information includes a security configuration or a first cell ID of a first cell, and an integrity detection failure occurs in the first cell, the first terminal equipment does not deem that the cell or a frequency of the cell is barred, or, the first terminal equipment takes the cell or an intra-frequency cell as a candidate cell for cell selection or reselection.

In the embodiment of this disclosure, for example, as shown in FIG. 16, the apparatus 1600 further includes:
a fifth transmitting unit 1603 configured to transmit a first RRC reconfiguration completion message protected by using a security configuration configured by the source IAB donor node, and/or,
a sixth transmitting unit 1604 configured to transmit a second RRC reconfiguration completion message protected by using a security configuration configured by the target IAB donor node.

In the embodiment of this disclosure, for example, the protecting an RRC message by using a security configuration refers to encrypting the RRC message by using an encryption algorithm and a corresponding key in the security configuration, and protecting integrity of the RRC message by using an integrity algorithm and a corresponding key in the security configuration.

This includes protecting an RRC message by using the security configuration configured by the source IAB donor node, which means encrypting the RRC message by using an encryption algorithm and a corresponding key in the security configuration configured by the source IAB donor node, and protecting integrity of the RRC message by using an integrity algorithm and a corresponding key in the security configuration configured by the source IAB donor node.

It further includes protecting an RRC message by using the security configuration configured by the target IAB donor node to, which means encrypting the RRC message by using the encryption algorithm and corresponding key in the security configuration configured by the target IAB donor node, and protecting integrity of the RRC message by using the integrity algorithm and corresponding key in the security configuration configured by the target IAB donor node.

In the embodiment of this disclosure, for example, a PDCP entity or PDCP layer performs protection of an RRC message by using a security configuration.

It can be seen from the above embodiment that when the first indication information is obtained, or when the security configuration in the stored first configuration information includes a security configuration corresponding to the selected or reselected cell, the terminal equipment applies the security configuration in the stored first configuration information, which may ensure that the terminal equipment may apply a correct security configuration, and reduce interruption of services of the terminal equipment.

### Embodiment 8

The embodiment of this disclosure provides a migration apparatus for an IAB-node, applicable to a first IAB-node. As a principle of the apparatus for solving problems is similar to that of the method in Embodiment 2, reference may be made to the implementation of the method in Embodiment 2 for implementation of the apparatus, with identical contents being not going to be repeated herein any further.

FIG. 18 is a schematic diagram of the migration apparatus for an IAB-node of Embodiment 8 of this disclosure. As shown in FIG. 18, an apparatus 1800 includes:
a first transmitting unit 1801 configured to transmit first configuration information to a terminal equipment served by the first IAB-node and/or a descendant IAB-node of the first IAB-node, the first configuration information comprising security configuration configured by a target IAB donor node; and
a second transmitting unit 1802 configured to transmit first indication information to the terminal equipment and/or the descendant IAB-node, the first indication information being used for indicating that a first terminal equipment applies the security configuration in the first configuration information, the first terminal equipment comprising the terminal equipment served by the first IAB-node and/or a terminal equipment served by the descendant IAB-node of the first IAB-node.

In the embodiment of this disclosure, the first indication information is provided explicitly or implicitly.

For example, the first indication information is provided explicitly by the first IAB-node.

For example, the first indication information is included in an L1 indication message or an MAC indication message.

For example, the L1 indication message reuses a short message of a paging message.

For example, an idle bit in the short message is used to indicate applying the security configuration in the stored first configuration information.

For example, when the short message is associated with a paging message, a terminal equipment ID is included in the paging message and the short message indicates applying the security configuration in the stored first configuration information, the first terminal equipment applies the security configuration in the stored first configuration information.

For example, the idle bit in the short message indicates applying an index of the security configuration in the stored first configuration information.

For example, when the short message is associated with a paging message, a terminal equipment ID is included in the paging message and the short message indicates applying an index of the security configuration in the stored first configuration information, the first terminal equipment applies a security configuration to which the index of the security configuration in the stored first configuration information corresponds.

For example, the MAC indication message indicates whether to apply the security configuration in the stored first configuration information or indicates a cell ID via an MAC CE.

For example, one bit in the MAC CE is used to indicate whether to apply the security configuration in the stored first configuration information.

For example, when the MAC CE includes a cell ID, a security configuration corresponding to the cell ID in the stored first configuration information is applied.

For example, the first indication information is provided implicitly by changing a cell ID by using identical physical cell IDs (PCIs).

For example, when a cell ID is configured via operation administration and maintenance (OAM) or signaling and the cell ID is different from a previous cell ID, the new cell ID is applied. The application of the new cell ID includes that system information and an RRC dedicated message include the new cell ID.

In the embodiment of this disclosure, for example, as shown in FIG. 18, the apparatus 1800 further includes:
a first receiving unit 1803 configured to receive the first configuration information from the source IAB donor node of the first IAB-node.

In the embodiment of this disclosure, the first configuration information may be included in a first RRC message.

In the embodiment of this disclosure, the first RRC message may include second indication information,
the second indication information being used for indicating that the terminal equipment and/or a terminal equipment served by a descendant node of the first IAB-node store(s) the first RRC message or a part of configurations in the first RRC message or the first configuration information including the security configuration.

For example, the first RRC message is a migration configuration message, or a security update message, or an RRC reconfiguration message.

For example, the security configuration in the first configuration information includes a security configuration of a cell.

For example, the security configuration in the first configuration information may include at least one entry, the entry including a cell ID and a security configuration corresponding to the cell ID.

For example, the first configuration information may further include a condition for applying the security configuration in the stored first configuration information and/or a valid time and/or area of the entry.

It can be seen from the above embodiment that when the first indication information is obtained, or when the security configuration in the stored first configuration information includes a security configuration corresponding to the selected or reselected cell, the terminal equipment applies the security configuration in the stored first configuration information, which may ensure that the terminal equipment may apply a correct security configuration, and reduce interruption of services of the terminal equipment.

### Embodiment 9

The embodiment of this disclosure provides a migration apparatus for an IAB-node, applicable to a first IAB donor node, the first IAB donor node being a source IAB donor node of a first IAB-node. As a principle of the apparatus for solving problems is similar to that of the method in Embodiment 3, reference may be made to the implementation of the method in Embodiment 3 for implementation of the apparatus, with identical contents being not going to be repeated herein any further.

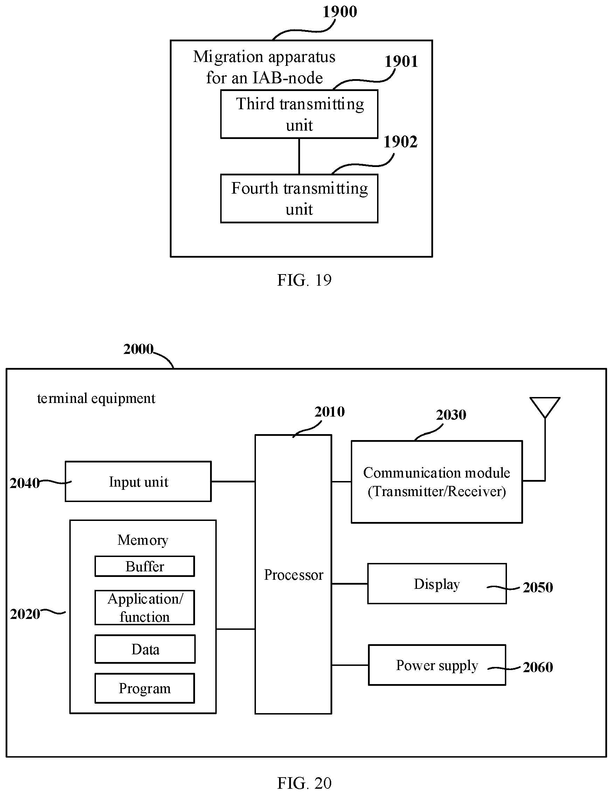

FIG. 19 is a schematic diagram of the migration apparatus for an IAB-node of Embodiment 9 of this disclosure. As shown in FIG. 19, an apparatus 1900 includes:
a third transmitting unit 1901 configured to transmit first configuration information to the first IAB-node, the first configuration information comprising security configuration configured by a target IAB donor node; and
a fourth transmitting unit 1902 configured to transmit third indication information to the target IAB donor node, the third indication information being used for indicating that the first terminal equipment applies the security configuration in the first configuration information, the first terminal equipment comprising a terminal equipment served by the first IAB-node and/or a terminal equipment served by a descendant IAB-node of the first IAB-node.

In the embodiment of this disclosure, the third indication information may be transmitted by the source IAB donor node of the first IAB-node to the first terminal equipment via the target IAB donor node and the first IAB-node.

For example, the third indication information is transmitted by the source IAB donor node of the first IAB-node to the target IAB donor node via an Xn interface or an NG interface, and is transmitted by the target IAB donor node to the first IAB-node via an F1 interface.

For example, the third indication information is included in a system message or a terminal equipment-specific dedicated message.

For example, when the network device includes an indication in the system message, the first terminal equipment applies the security configuration; or, when the network device includes a cell ID in the system message, the first terminal equipment applies a corresponding configuration of the cell in the security configuration.

In the embodiment of this disclosure, third transmitting unit 1901 may transmit the first configuration information to the first IAB-node via the Xn interface or the NG interface.

In the embodiment of this disclosure, the first configuration information may be included in a first RRC message.

For example, the first RRC message is a migration configuration message, or a security update message, or an RRC reconfiguration message.

For example, the first RRC message may include second indication information, the second indication information being used for indicating that the first terminal equipment stores the first RRC message or a part of configurations in the first RRC message or the first configuration information including the security configuration.

For example, the first RRC message is a migration configuration message, or a security update message, or an RRC reconfiguration message.

For example, the security configuration in the first configuration information may include security configuration of a cell.

For example, the security configuration in the first configuration information includes at least one entry, the entry including a cell ID and a security configuration corresponding to the cell ID.

For example, the first configuration information may further include a condition for applying the security configuration in the stored first configuration information and/or a valid time and/or area of the entry.

It can be seen from the above embodiment that when the first indication information is obtained, or when the security configuration in the stored first configuration information includes a security configuration corresponding to the selected or reselected cell, the terminal equipment applies the security configuration in the stored first configuration information, which may ensure that the terminal equipment may apply a correct security configuration, and reduce interruption of services of the terminal equipment.

### Embodiment 4

The embodiment of this disclosure provides a terminal equipment, including the migration apparatus for an IAB-node as described in Embodiment 7.

FIG. 20 is a block diagram of a systematic structure of the terminal equipment of embodiment 10 of this disclosure. As shown in FIG. 20, a terminal equipment 2000 may include a processor 2010 and a memory 2020, the memory 2020 being coupled to the processor 2010. It should be noted that this figure is illustrative only, and other types of structures may also be used, so as to supplement or replace this structure and achieve a telecommunications function or other functions.

In one implementation, the functions of the migration apparatus for an IAB-node may be integrated into the processor 2010. The processor 2010 may be configured to: store first configuration information, the first configuration information comprising security configuration configured by a target IAB donor node; and apply the security configuration in a stored first configuration information when first indication information is obtained or the security configuration in the stored first configuration information comprises security configuration corresponding to a selected or reselected cell.

In another implementation, the migration apparatus for an IAB-node and the processor 2010 may be configured separately; for example, the migration apparatus for an IAB-node may be configured as a chip connected to the processor 2010, and the functions of the migration apparatus for an IAB-node are executed under control of the processor 2010.

As shown in FIG. 20, the terminal equipment 2000 may further include a communication module 2030, an input unit 2040, a display 2050 and a power supply 2060. It should be noted that the terminal equipment 2000 does not necessarily include all the parts shown in FIG. 20. Furthermore, the terminal equipment 2000 may include parts not shown in FIG. 20, and the prior art may be referred to.

As shown in FIG. 20, the processor 2010 is sometimes referred to as a controller or an operational control, which may include a microprocessor or other processor devices and/or logic devices. The processor 2010 receives input and controls operations of components of the terminal equipment 2000.

The memory 2020 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 2010 may execute programs stored in the memory 2020, so as to realize information storage or processing, etc. Functions of other parts are similar to those of the prior art, which shall not be described herein any further. The parts of the terminal equipment 2000 may be realized by specific hardware, firmware, software, or any combination thereof, without departing from the scope of this disclosure.

It can be seen from the above embodiment that when the first indication information is obtained, or when the security configuration in the stored first configuration information includes a security configuration corresponding to the selected or reselected cell, the terminal equipment applies the security configuration in the stored first configuration information, which may ensure that the terminal equipment may apply a correct security configuration, and reduce interruption of services of the terminal equipment.

### Embodiment 11

The embodiment of this disclosure provides a network device, including the migration apparatus for an IAB-node as described in Embodiment 8.

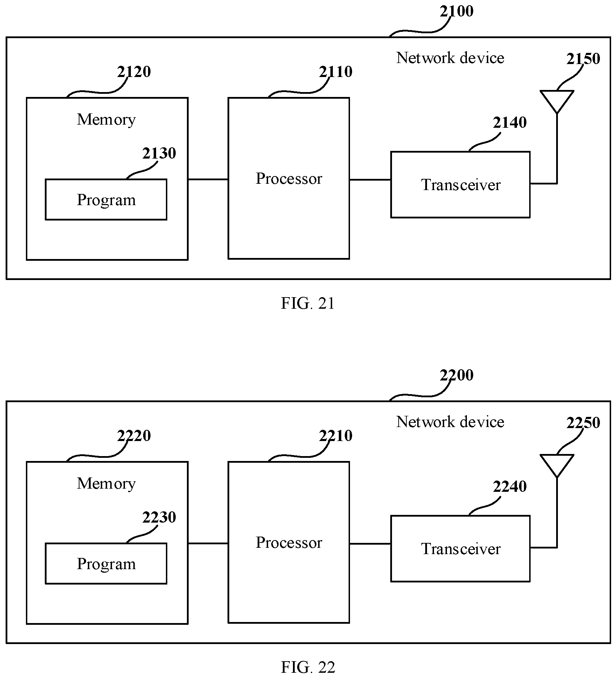

FIG. 21 is a block diagram of a systematic structure of the network device of Embodiment 11 of this disclosure. As shown in FIG. 21, a network device 2100 may include a processor 2110 and a memory 2120, the memory 2120 being coupled to the processor 2110. The memory 2120 may store various data, and furthermore, it may store a program 2130 for information processing, and execute the program 2130 under control of the processor 2110, so as to receive various information transmitted by a terminal equipment, and transmit various information to the terminal equipment.

In one implementation, the functions of the migration apparatus for an IAB-node may be integrated into the processor 2110. The processor 2110 may be configured to: transmit first configuration information to a terminal equipment served by the first IAB-node and/or a descendant IAB-node of the first IAB-node, the first configuration information including security configuration configured by a target IAB donor node; and transmit first indication information to the terminal equipment and/or the descendant IAB-node, the first indication information being used for indicating that a first terminal equipment applies the security configuration in the first configuration information, the first terminal equipment including a terminal equipment served by the first IAB-node and/or a terminal equipment served by a descendant IAB-node of the first IAB-node.

In another implementation, the migration apparatus for an IAB-node and the processor 2110 may be configured separately; for example, the migration apparatus for an IAB-node may be configured as a chip connected to the processor 2110, and the functions of the migration apparatus for an IAB-node are executed under control of the processor 2110.

Furthermore, as shown in FIG. 21, the network device 2100 may include a transceiver 2140, and an antenna 2150, etc. Functions of the above components are similar to those in the prior art, and shall not be described herein any further. It should be noted that the network device 2100 does not necessarily include all the parts shown in FIG. 21. Furthermore, the network device 2100 may include parts not shown in FIG. 21, and the prior art may be referred to.

It can be seen from the above embodiment that when the first indication information is obtained, or when the security configuration in the stored first configuration information includes a security configuration corresponding to the selected or reselected cell, the terminal equipment applies the security configuration in the stored first configuration information, which may ensure that the terminal equipment may apply a correct security configuration, and reduce interruption of services of the terminal equipment.

### Embodiment 12

The embodiment of this disclosure provides a network device, including the migration apparatus for an IAB-node as described in Embodiment 9.

FIG. 22 is a block diagram of a systematic structure of the network device of Embodiment 12 of this disclosure. As shown in FIG. 22, a network device 2200 may include a processor 2210 and a memory 2220, the memory 2220 being coupled to the processor 2210. The memory 2220 may store various data, and furthermore, it may store a program 2230 for information processing, and execute the program 2230 under control of the processor 2210, so as to receive various information transmitted by a terminal equipment, and transmit various information to the terminal equipment.

In one implementation, the functions of the migration apparatus for an IAB-node may be integrated into the processor 2210. Wherein, the processor 2210 may be configured to: transmit first configuration information to the first IAB-node, the first configuration information including security configuration configured by a target IAB donor node; and transmit third indication information to the target IAB donor node, the third indication information being used for indicating that the first terminal equipment applies the security configuration in the first configuration information, the first terminal equipment comprising a terminal equipment served by the first IAB-node and/or a terminal equipment served by a descendant IAB-node of the first IAB-node.

In another implementation, the migration apparatus for an IAB-node and the processor 2210 may be configured separately; for example, the migration apparatus for an IAB-node may be configured as a chip connected to the processor 2210, and the functions of the migration apparatus for an IAB-node are executed under control of the processor 2210.

Furthermore, as shown in FIG. 22, the network device 2200 may include a transceiver 2240, and an antenna 2250, etc. Functions of the above components are similar to those in the prior art, and shall not be described herein any further. It should be noted that the network device 2200 does not necessarily include all the parts shown in FIG. 22. Furthermore, the network device 2200 may include parts not shown in FIG. 22, and the prior art may be referred to.

It can be seen from the above embodiment that when the first indication information is obtained, or when the security configuration in the stored first configuration information includes a security configuration corresponding to the selected or reselected cell, the terminal equipment applies the security configuration in the stored first configuration information, which may ensure that the terminal equipment may apply a correct security configuration, and reduce interruption of services of the terminal equipment.

### Embodiment 13

The embodiment of this disclosure provides a communication system.

For example, the communication system includes a first network device and a terminal equipment, the terminal equipment being the terminal equipment according to Embodiment 10, and the first network device being the network device according to Embodiment 12.

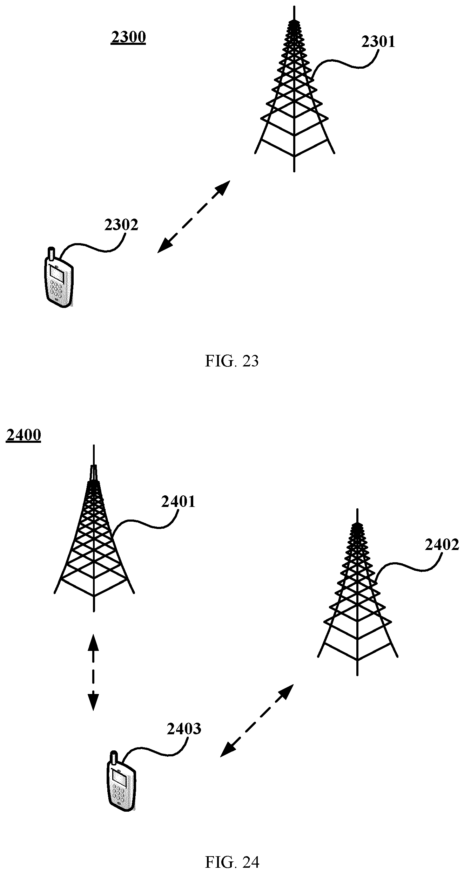

FIG. 23 is a schematic diagram of the communication system of Embodiment 13 of this disclosure. As shown in FIG. 23, a communication system 2300 includes a first network device 2301 and a terminal equipment 2302, that is, the terminal equipment is directly connected to an IAB donor node.

For another example, the communication system includes a first network device a second network device and a terminal equipment, the terminal equipment being the terminal equipment according to Embodiment 10, the first network device being the network device according to Embodiment 12, and the second network device being a target IAB donor node or a first IAB-node.

FIG. 24 is another schematic diagram of the communication system of Embodiment 13 of this disclosure. As shown in FIG. 24, a communication system 2400 includes a first network device 2401, a second network device 2402 and a terminal equipment 2403, the terminal equipment 2403 being directly connected to the first network device 2401 or the second network device 2402 taken as an IAB donor node.

For a further example, the communication system includes a first network device, a second network device and a terminal equipment, the terminal equipment being the terminal equipment according to Embodiment 10, the first network device being the network device according to Embodiment 12, and the second network device being the network device according to Embodiment 11.

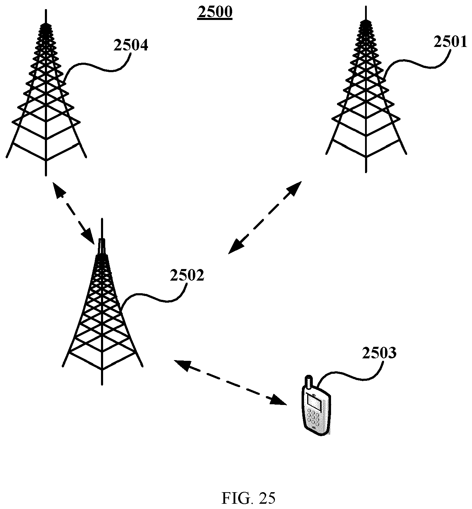

FIG. 25 is a further schematic diagram of the communication system of Embodiment 13 of this disclosure. As shown in FIG. 25, a communication system 2500 includes a first network device 2501, a second network device 2502 and a terminal equipment 2503. The second network device 2502 is taken as a relay node, i.e. a first IAB node, and the terminal equipment 2503 is connected to the first network device 2501 via the second network device 2502. And furthermore, the communication system 2500 includes a fourth network device 2504, the fourth network device 2504 being a target IAB donor node of the first IAB node.

For still another example, the communication system includes a first network device, a second network device, a third network device and a terminal equipment, the terminal equipment being the terminal equipment according to Embodiment 10, the first network device being the network device according to Embodiment 12, the second network device being the network device according to Embodiment 11, and the third network device being a descendant node of the first IAB node. The terminal equipment is a terminal equipment served by the descendant node of the first IAB node, or the terminal equipment is a terminal equipment served by the first IAB node.

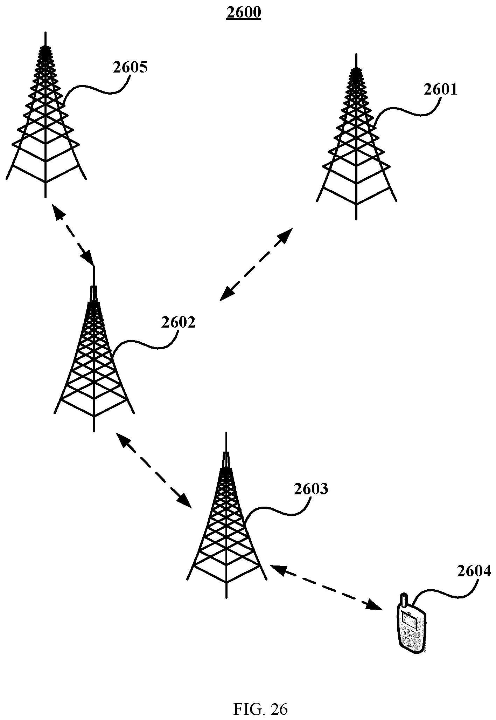

FIG. 26 is still another schematic diagram of the communication system of Embodiment 13 of this disclosure. As shown in FIG. 26, a communication system 2600 includes a first network device 2601, a second network device 2602, a third network device 2603 and a terminal equipment 2604. The second network device 2602 is taken as a relay node, i.e. the first IAB node, the third network device 2603 is a descendant IAB-node of the second network device 2602, i.e. the first IAB node, the terminal equipment 2604 is a terminal equipment served by the third network device 2603, i.e. a descendant IAB-node of the first IAB node. And furthermore, the communication system 2600 includes a fourth network device 2605, which is a target IAB donor node of the first IAB node.

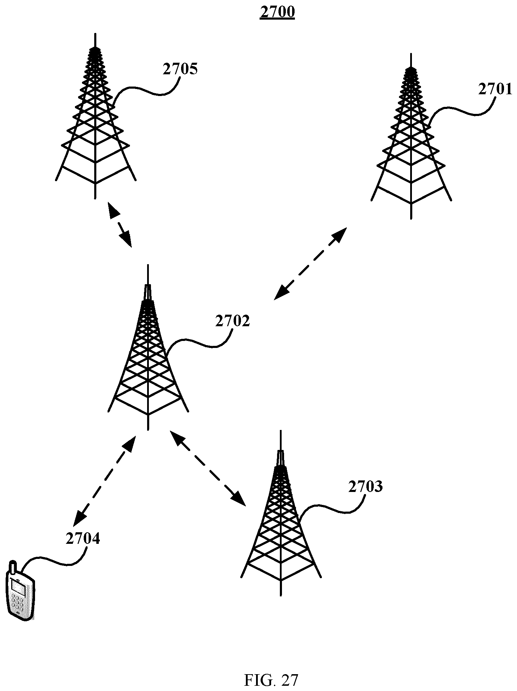

FIG. 27 is yet another schematic diagram of the communication system of Embodiment 13 of this disclosure. As shown in FIG. 27, a communication system 2700 includes a first network device 2701, a second network device 2702, a third network device 2703 and a terminal equipment 2704. The second network device 2702 is taken as a relay node, i.e. a first IAB node, the third network device 2703 is a descendant IAB-node of the second network device 2702, i.e. the first IAB node, the terminal equipment 2704 is a terminal equipment served by the second network device 2702, i.e. the first IAB node. And furthermore, the communication system 2700 includes a fourth network device 2705, which is a target IAB donor node of the first IAB node.

In the examples in FIGs. 25, 26 and 27, the communication system includes the IAB donor node and the target IAB donor node, and in the embodiment of this disclosure, it may also be that the communication system includes an IAB donor node.

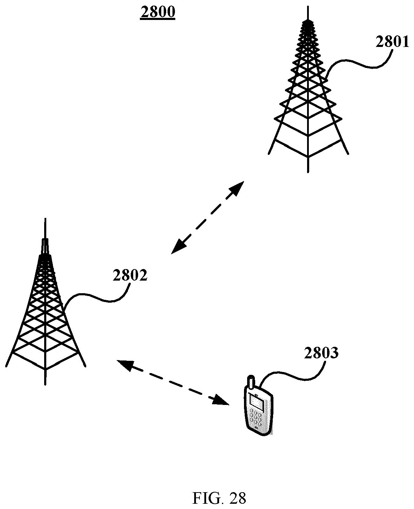

FIG. 28 is yet further schematic diagram of the communication system of Embodiment 13 of this disclosure. As shown in FIG. 28, a communication system 2800 includes a first network device 2801, a second network device 2802 and a terminal equipment 2803. The second network device 2802 is taken as a relay node, i.e. a first IAB node, and the terminal equipment 2803 is connected to the first network device 2801 via the second network device 2802.

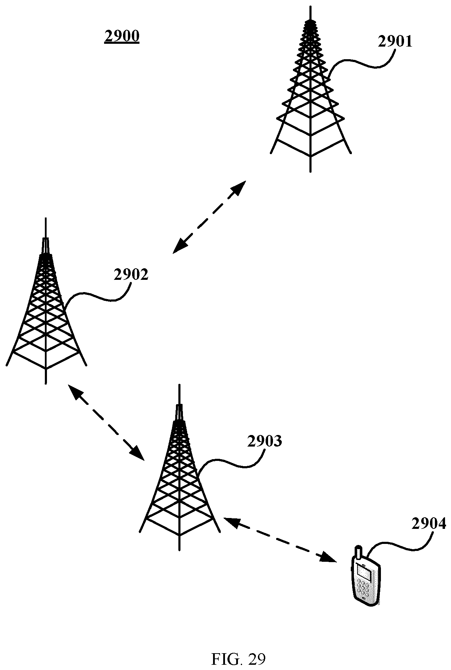

FIG. 29 is yet further another schematic diagram of the communication system of Embodiment 13 of this disclosure. As shown in FIG. 29, a communication system 2900 includes a first network device 2901, a second network device 2902, a third network device 2903 and a terminal equipment 2904. The second network device 2902 is taken as a relay node, i.e. a first IAB node, the third network device 2903 is a descendant IAB-node of the second network device 2902, i.e. the first IAB node, and the terminal equipment 2904 is a terminal equipment served by the third network device 2903, i.e. the descendant IAB-node of the first IAB node.

FIG. 30 is yet still another schematic diagram of the communication system of Embodiment 13 of this disclosure. As shown in FIG. 30, a communication system 3000 includes a first network device 3001, a second network device 3002, a third network device 3003 and a terminal equipment 3004. The second network device 3002 is taken as a relay node, i.e. a first IAB node, the third network device 3003 is a descendant IAB-node of the second network device 3002, i.e. the first IAB node, and the terminal equipment 3004 is a terminal equipment served by the second network device 3002, i.e. the descendant IAB-node of the first IAB node. And furthermore, the communication system 3000 includes a fourth network device 3005, which is a target IAB donor node of the first IAB node.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 16 may either correspond to software modules of procedures of a computer program, or correspond to hardware modules. Such software modules may respectively correspond to the steps shown in FIG. 9. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 16 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 16 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

According to the implementations disclosed in the embodiments of this disclosure, following supplements are further disclosed.

### Supplement I

1. A migration apparatus for an IAB-node, applicable to a first terminal equipment, the first terminal equipment comprising a terminal equipment served by a first IAB-node and/or a terminal equipment served by a descendant IAB-node of the first IAB-node, the apparatus comprising:
   a first storage unit configured to store first configuration information, the first configuration information comprising security configuration configured by a target IAB donor node; and
   a first applying unit configured to apply the security configuration in a stored first configuration information when first indication information is obtained or the security configuration in the stored first configuration information comprises security configuration corresponding to a selected or reselected cell.
2. The apparatus according to supplement 1, wherein,
   the first indication information is provided explicitly or implicitly.
3. The apparatus according to supplement 1 or 2, wherein,
   the first indication information is provided explicitly by the first IAB-node.
4. The apparatus according to any one of supplements 1-3, wherein,
   the first indication information is comprised in an L1 indication message or an MAC indication message.
5. The apparatus according to supplement 4, wherein,
   the L1 indication message reuses a short message of a paging message.
6. The apparatus according to supplement 5, wherein,
   an idle bit in the short message is used to indicate applying the security configuration in the stored first configuration information.
7. The apparatus according to supplement 5 or 6, wherein,
   when the short message is associated with a paging message, a terminal equipment ID is included in the paging message and the short message indicates applying the security configuration in the stored first configuration information, the first applying unit applies the security configuration in the stored first configuration information.
8. The apparatus according to supplement 5, wherein,
   the idle bit in the short message indicates applying an index of the security configuration in the stored first configuration information.
9. The apparatus according to supplement 8, wherein,
   when the short message is associated with a paging message, a terminal equipment ID is included in the paging message and the short message indicates applying an index of the security configuration in the stored first configuration information, the first applying unit applies a security configuration to which the index of the security configuration in the stored first configuration information corresponds.
10. The apparatus according to supplement 4, wherein,
   the MAC indication message indicates whether to apply the security configuration in the stored first configuration information or indicates a cell ID via an MAC CE.
11. The apparatus according to supplement 10, wherein,
   one bit in the MAC CE is used to indicate whether to apply the security configuration to which the bit corresponds in the stored first configuration information.
12. The apparatus according to supplement 10, wherein,
   when the MAC CE includes a cell ID, the first applying unit applies security configuration corresponding to the cell ID in the stored first configuration information.
13. The apparatus according to supplement 1 or 2, wherein,
   the first indication information is provided explicitly by a source IAB donor node of the first IAB-node.
14. The apparatus according to supplement 13, wherein,
   the first indication information is transmitted by the source IAB donor node of the first IAB-node to the first terminal equipment via a target IAB donor node of the first IAB-node and the first IAB-node.
15. The apparatus according to supplement 14, wherein,
   the first indication information is transmitted by the source IAB donor node of the first IAB-node to the target IAB donor node of the first IAB-node via an Xn interface or an NG interface, and is transmitted by the target IAB donor node to the first IAB-node via an F1 interface.
16. The apparatus according to any one of supplements 13-15, wherein,
   the first indication information is comprised in a system message or a terminal equipment-specific dedicated message.
17. The apparatus according to supplement 1 or 2, wherein,
   the first indication information is provided implicitly when a cell ID change of identical physical cell IDs (PCIs) detected by the first terminal equipment.
18. The apparatus according to any one of supplements 1-17, wherein,
   the first configuration information is comprised in a first RRC message.
19. The apparatus according to supplement 18, wherein,
   the first RRC message includes second indication information,
   the second indication information being used for indicating that the first terminal equipment stores the first RRC message or a part of configurations in the first RRC message or the first configuration information including the security configuration.
20. The apparatus according to supplement 18 or 19, wherein,
   the first RRC message is a migration configuration message, or a security update message, or an RRC reconfiguration message.
21. The apparatus according to any one of supplements 1-20, wherein,
   the security configuration in the first configuration information comprises a security configuration of a cell.
22. The apparatus according to supplement 21, wherein,
   the security configuration in the first configuration information comprises at least one entry, the at least one entry comprising a cell ID and a security configuration corresponding to the cell ID.
23. The apparatus according to supplement 22, wherein,
   the first configuration information further comprises a condition for applying the security configuration in the stored first configuration information and/or a valid time and/or area of the entry.
24. The apparatus according to any one of supplements 1 and 18-23, wherein the apparatus further comprises:
   a first detecting unit configured to perform integrity detection; and
   a selecting unit configured to perform cell selection or reselection when the integrity detection fails.
25. The apparatus according to supplement 24, wherein the apparatus further comprises:
   a first processing unit configured to perform connection reestablishment or apply the security configuration in the first stored first configuration information according to a selected or reselected cell.
26. The apparatus according to supplement 24 or 25, wherein,
   the selected or reselected cell is identical to the cell where the integrity detection fails or is an intra-frequency cell of the cell where the integrity detection fails or an inter-frequency cell of the cell where the integrity detection fails.
27. The apparatus according to any one of supplements 24-26, wherein,
   when the first configuration information is received and the first configuration information comprises a security configuration or a first cell ID of a first cell, and an integrity detection failure occurs in the first cell, the first terminal equipment does not deem that the cell or a frequency of the cell is barred, or, the first terminal equipment takes the cell or an intra-frequency cell as a candidate cell for cell selection or reselection.
28. The apparatus according to any one of supplements 1-27, wherein the apparatus further comprises:
   a fifth transmitting unit configured to transmit a first RRC reconfiguration completion message protected by using a security configuration configured by the source IAB donor node, and/or,
   a sixth transmitting unit configured to transmit a second RRC reconfiguration completion message protected by using a security configuration configured by the target IAB donor node.
28a. The apparatus according to supplement 28, wherein,
   the protecting an RRC message by using a security configuration refers to encrypting the RRC message by using an encryption algorithm and a corresponding key in the security configuration configured by the source IAB donor node, and performing integrity protection by using an integrity algorithm and a corresponding key in the security configuration configured by the source IAB donor node.
28b. The apparatus according to supplement 28a, wherein,
   the protecting an RRC message by using the security configuration configured by the source IAB donor node refers to encrypting the RRC message by using an encryption algorithm and a corresponding key in the security configuration configured by the source IAB donor node, and performing integrity protection on the RRC message by using an integrity algorithm and a corresponding key in the security configuration configured by the source IAB donor node.
28c. The apparatus according to supplement 28a, wherein,
   the protecting an RRC message by using the security configuration configured by the source IAB donor node refers to encrypting the RRC message by using the encryption algorithm and corresponding key in the security configuration configured by the target IAB donor node, and performing integrity protection on the RRC message by using the integrity algorithm and corresponding key in the security configuration configured by the target IAB donor node.
28d. The apparatus according to any one of supplements 28-28c, wherein,
   a PDCP entity or PDCP layer performs protection of the RRC message by using the security configuration.
29. A migration apparatus for an IAB-node, applicable to a first IAB-node, the apparatus comprising:
   a first transmitting unit configured to transmit first configuration information to a terminal equipment served by the first IAB-node and/or a descendant IAB-node of the first IAB-node, the first configuration information comprising security configuration configured by a target IAB donor node; and
   a second transmitting unit configured to transmit first indication information to the terminal equipment and/or the descendant IAB-node, the first indication information being used for indicating that a first terminal equipment applies the security configuration in the first configuration information, the first terminal equipment comprising the terminal equipment served by the first IAB-node and/or a terminal equipment served by the descendant IAB-node of the first IAB-node.
30. The apparatus according to supplement 29, wherein,
   the first indication information is provided explicitly or implicitly.
31. The apparatus according to supplement 29 or 30, wherein,
   the first indication information is provided explicitly by the first IAB-node.
32. The apparatus according to any one of supplements 29-31, wherein,
   the first indication information is comprised in an L1 indication message or an MAC indication message.
33. The apparatus according to supplement 32, wherein,
   the L1 indication message reuses a short message of a paging message.
34. The apparatus according to supplement 33, wherein,
   an idle bit in the short message is used to indicate applying the security configuration in the stored first configuration information.
35. The apparatus according to supplement 33 or 34, wherein,
   when the short message is associated with a paging message, a terminal equipment ID is included in the paging message and the short message indicates applying the security configuration in the stored first configuration information, the first terminal equipment applies the security configuration in the stored first configuration information.
36. The apparatus according to supplement 33, wherein,
   the idle bit in the short message indicates applying an index of the security configuration in the stored first configuration information.
37. The apparatus according to supplement 36, wherein,
   when the short message is associated with a paging message, a terminal equipment ID is included in the paging message and the short message indicates applying an index of the security configuration in the stored first configuration information, the first applying unit applies a security configuration to which the index of the security configuration in the stored first configuration information corresponds.
38. The apparatus according to supplement 32, wherein,
   the MAC indication message indicates whether to apply the security configuration in the stored first configuration information or indicates a cell ID via an MAC CE.
39. The apparatus according to supplement 38, wherein,
   one bit in the MAC CE is used to indicate whether to apply the security configuration in the stored first configuration information.
40. The apparatus according to supplement 38, wherein,
   when the MAC CE includes a cell ID, a security configuration corresponding to the cell ID in the stored first configuration information is applied.
41. The apparatus according to supplement 29 or 30, wherein,
   the first indication information is provided implicitly when a cell ID change of identical physical cell IDs (PCIs) detected by the first terminal equipment.
42. The apparatus according to supplement 41, wherein,
   when a cell ID is configured via operation administration and maintenance (OAM) or signaling and the cell ID is different from a previous cell ID, the new cell ID is applied,
   the application of the new cell ID including that system information and an RRC dedicated message include the new cell ID.
43. The apparatus according to any one of supplements 29-42, wherein the apparatus further comprises:
   a first receiving unit configured to receive the first configuration information from the source IAB donor node of the first IAB-node.
44. The apparatus according to any one of supplements 29-43, wherein,
   the first configuration information is comprised in a first RRC message.
45. The apparatus according to supplement 44, wherein,
   the first RRC message includes second indication information,
   the second indication information being used for indicating that the first terminal equipment stores the first RRC message or a part of configurations in the first RRC message or the first configuration information including the security configuration.
46. The apparatus according to supplement 44 or 45, wherein,
   the first RRC message is a migration configuration message, or a security update message, or an RRC reconfiguration message.
47. The apparatus according to any one of supplements 29-32, wherein,
   the security configuration in the first configuration information comprises a security configuration of a cell.
48. The apparatus according to supplement 47, wherein,
   the security configuration in the first configuration information comprises at least one entry, the at least one entry comprising a cell ID and a security configuration corresponding to the cell ID.
49. The apparatus according to supplement 47, wherein,
   the first configuration information further comprises a condition for applying the security configuration in the stored first configuration information and/or a valid time and/or area of the entry.
50. A migration apparatus for an IAB-node, applicable to a first IAB donor node, the first IAB donor node being a source IAB donor node of a first IAB-node,
   the apparatus comprising:
   a third transmitting unit configured to transmit first configuration information to the first IAB-node, the first configuration information comprising security configuration configured by a target IAB donor node; and
   a fourth transmitting unit configured to transmit third indication information to the target IAB donor node, the third indication information being used for indicating that the first terminal equipment applies the security configuration in the first configuration information, the first terminal equipment comprising a terminal equipment served by the first IAB-node and/or a terminal equipment served by a descendant IAB-node of the first IAB-node.
51. The apparatus according to supplement 50, wherein,
   the third indication information is transmitted by the source IAB donor node of the first IAB-node to the first terminal equipment via the target IAB donor node and the first IAB-node.
52. The apparatus according to supplement 51, wherein,
   the third indication information is transmitted by the source IAB donor node of the first IAB-node to the target IAB donor node via an Xn interface or an NG interface, and is transmitted by the target IAB donor node to the first IAB-node via an F1 interface.
53. The apparatus according to any one of supplements 50-52, wherein,
   the third indication information is included in a system message or a terminal equipment-specific dedicated message.
54. The apparatus according to supplement 53, wherein,
   when a network device includes an indication in a system message, the first terminal equipment applies the security configuration; or,
   when the network device includes a cell ID in the system message, the first terminal equipment applies a corresponding configuration of the cell in the security configuration.
55. The apparatus according to any one of supplements 50-54, wherein,
   the second transmitting unit transmits the first configuration information to the first IAB-node via the Xn interface or the NG interface.
56. The apparatus according to any one of supplements 50-55, wherein,
   the first configuration information is included in a first RRC message.
57. The apparatus according to supplement 56, wherein,
   the first RRC message may include second indication information,
   the second indication information being used for indicating that the first terminal equipment stores the first RRC message or a part of configurations in the first RRC message or the first configuration information including the security configuration.
58. The apparatus according to supplement 56 or 57, wherein,
   the first RRC message is a migration configuration message, or a security update message, or an RRC reconfiguration message.
59. The apparatus according to any one of supplements 50-58, wherein,
   the security configuration in the first configuration information includes security configuration of a cell.
60. The apparatus according to supplement 59, wherein,
   the security configuration in the first configuration information includes at least one entry, the entry including a cell ID and a security configuration corresponding to the cell ID.
61. The apparatus according to supplement 60, wherein,
   the first configuration information further includes a condition for applying the security configuration in the stored first configuration information and/or a valid time and/or area of the entry.
62. A terminal equipment, comprising the apparatus as described in any one of supplements 1-28.
63. A network device, comprising the apparatus as described in any one of supplements 29-61.
64. A communication system, comprising a first network device and a terminal equipment,
   the terminal equipment comprising the apparatus as described in any one of supplements 1-28,
   and the network device comprising the apparatus as described in any one of supplements 50-61.
65. A communication system, comprising a first network device, a fourth network device and a terminal equipment,
   the terminal equipment comprising the apparatus as described in any one of supplements 1-28,
   the first network device comprising the apparatus as described in any one of supplements 50-61,
   and the fourth network device being a target IAB donor node of a first IAB-node.
66. A communication system, comprising a first network device, a second network device and a terminal equipment,
   the terminal equipment comprising the apparatus as described in any one of supplements 1-28,
   the first network device comprising the apparatus as described in any one of supplements 50-61,
   and the second network device comprising the apparatus as described in any one of supplements 29-49.
67. A communication system, comprising a first network device, a second network device, a third network device and a terminal equipment,
   the terminal equipment comprising the apparatus as described in any one of supplements 1-28,
   the first network device comprising the apparatus as described in any one of supplements 50-61,
   the second network device comprising the apparatus as described in any one of supplements 29-49,
   and the third network device being a descendant node of a first IAB-node.
68. The communication system according to supplement 67, wherein,
   the terminal equipment is a terminal equipment served by the second network device or the third network device.

### Supplement II

1. A migration method for an IAB-node, applicable to a first terminal equipment, the first terminal equipment comprising a terminal equipment served by a first IAB-node and/or a terminal equipment served by a descendant IAB-node of the first IAB-node, the method comprising:
   storing first configuration information, the first configuration information comprising security configuration configured by a target IAB donor node; and
   applying the security configuration in a stored first configuration information when first indication information is obtained or the security configuration in the stored first configuration information comprises security configuration corresponding to a selected or reselected cell.
2. The method according to supplement 1, wherein,
   the first indication information is provided explicitly or implicitly.
3. The method according to supplement 1 or 2, wherein,
   the first indication information is provided explicitly by the first IAB-node.
4. The method according to any one of supplements 1-3, wherein,
   the first indication information is comprised in an L1 indication message or an MAC indication message.
5. The method according to supplement 4, wherein,
   the L1 indication message reuses a short message of a paging message.
6. The method according to supplement 5, wherein,
   an idle bit in the short message is used to indicate applying the security configuration in the stored first configuration information.
7. The method according to supplement 5 or 6, wherein,
   when the short message is associated with a paging message, a terminal equipment ID is included in the paging message and the short message indicates applying the security configuration in the stored first configuration information, the first terminal equipment applies the security configuration in the stored first configuration information.
8. The method according to supplement 5, wherein,
   the idle bit in the short message indicates applying an index of the security configuration in the stored first configuration information.
9. The method according to supplement 8, wherein,
   when the short message is associated with a paging message, a terminal equipment ID is included in the paging message and the short message indicates applying an index of the security configuration in the stored first configuration information, the first terminal equipment applies a security configuration to which the index of the security configuration in the stored first configuration information corresponds.
10. The method according to supplement 4, wherein,
   the MAC indication message indicates whether to apply the security configuration in the stored first configuration information or indicates a cell ID via an MAC CE.
11. The method according to supplement 10, wherein,
   one bit in the MAC CE is used to indicate whether to apply the security configuration to which the bit corresponds in the stored first configuration information.
12. The method according to supplement 10, wherein,
   when the MAC CE includes a cell ID, a security configuration corresponding to the cell ID in the stored first configuration information is applied.
13. The method according to supplement 1 or 2, wherein,
   the first indication information is provided explicitly by a source IAB donor node of the first IAB-node.
14. The method according to supplement 13, wherein,
   the first indication information is transmitted by the source IAB donor node of the first IAB-node to the first terminal equipment via a target IAB donor node of the first IAB-node and the first IAB-node.
15. The method according to supplement 14, wherein,
   the first indication information is transmitted by the source IAB donor node of the first IAB-node to the target IAB donor node of the first IAB-node via an Xn interface or an NG interface, and is transmitted by the target IAB donor node to the first IAB-node via an F1 interface.
16. The method according to any one of supplements 13-15, wherein,
   the first indication information is comprised in a system message or a terminal equipment-specific dedicated message.
17. The method according to supplement 1 or 2, wherein,
   the first indication information is provided implicitly when a cell ID change of identical physical cell IDs (PCIs) detected by the first terminal equipment.
18. The method according to any one of supplements 1-17, wherein,
   the first configuration information is comprised in a first RRC message.
19. The method according to supplement 18, wherein,
   the first RRC message includes second indication information,
   the second indication information being used for indicating that the first terminal equipment stores the first RRC message or a part of configurations in the first RRC message or the first configuration information including the security configuration.
20. The method according to supplement 18 or 19, wherein,
   the first RRC message is a migration configuration message, or a security update message, or an RRC reconfiguration message.
21. The method according to any one of supplements 1-20, wherein,
   the security configuration in the first configuration information comprises a security configuration of a cell.
22. The method according to supplement 21, wherein,
   the security configuration in the first configuration information comprises at least one entry, the at least one entry comprising a cell ID and a security configuration corresponding to the cell ID.
23. The method according to supplement 22, wherein,
   the first configuration information further comprises a condition for applying the security configuration in the stored first configuration information and/or a valid time and/or area of the entry.
24. The method according to any one of supplements 1 and 18-23, wherein the method further comprises:
   performing integrity detection; and
   performing cell selection or reselection when the integrity detection fails.
25. The method according to supplement 24, wherein the method further comprises:
   performing connection reestablishment or applying the security configuration in the first stored first configuration information according to a selected or reselected cell.
26. The method according to supplement 24 or 25, wherein,
   the selected or reselected cell is identical to the cell where the integrity detection fails or is an intra-frequency cell of the cell where the integrity detection fails or an inter-frequency cell of the cell where the integrity detection fails.
27. The method according to any one of supplements 24-26, wherein,
   when the first configuration information is received and the first configuration information comprises a security configuration or a first cell ID of a first cell, and an integrity detection failure occurs in the first cell, the first terminal equipment does not deem that the cell or a frequency of the cell is barred, or, the first terminal equipment takes the cell or an intra-frequency cell as a candidate cell for cell selection or reselection.
28. The method according to any one of supplements 1-27, wherein the method further comprises:
   transmitting a first RRC reconfiguration completion message protected by using a security configuration configured by the source IAB donor node, and/or,
   transmitting a second RRC reconfiguration completion message protected by using a security configuration configured by the target IAB donor node.
28a. The method according to supplement 28, wherein,
   the protecting an RRC message by using a security configuration refers to encrypting the RRC message by using an encryption algorithm and a corresponding key in the security configuration configured by the source IAB donor node, and performing integrity protection by using an integrity algorithm and a corresponding key in the security configuration configured by the source IAB donor node.
28b. The method according to supplement 28a, wherein,
   the protecting an RRC message by using the security configuration configured by the source IAB donor node refers to encrypting the RRC message by using an encryption algorithm and a corresponding key in the security configuration configured by the source IAB donor node, and performing integrity protection on the RRC message by using an integrity algorithm and a corresponding key in the security configuration configured by the source IAB donor node.
28c. The method according to supplement 28a, wherein,
   the protecting an RRC message by using the security configuration configured by the source IAB donor node refers to encrypting the RRC message by using the encryption algorithm and corresponding key in the security configuration configured by the target IAB donor node, and performing integrity protection on the RRC message by using the integrity algorithm and corresponding key in the security configuration configured by the target IAB donor node.
28d. The method according to any one of supplements 28-28c, wherein,
   a PDCP entity or PDCP layer performs protection of the RRC message by using the security configuration.
29. A migration method for an IAB-node, applicable to a first IAB-node, the method comprising:
   transmitting first configuration information to a terminal equipment served by the first IAB-node and/or a descendant IAB-node of the first IAB-node, the first configuration information comprising security configuration configured by a target IAB donor node; and
   transmitting first indication information to the terminal equipment and/or the descendant IAB-node, the first indication information being used for indicating that a first terminal equipment applies the security configuration in the first configuration information, the first terminal equipment comprising the terminal equipment served by the first IAB-node and/or a terminal equipment served by the descendant IAB-node of the first IAB-node.
30. The method according to supplement 29, wherein,
   the first indication information is provided explicitly or implicitly.
31. The method according to supplement 29 or 30, wherein,
   the first indication information is provided explicitly by the first IAB-node.
32. The method according to any one of supplements 29-31, wherein,
   the first indication information is comprised in an L1 indication message or an MAC indication message.
33. The method according to supplement 32, wherein,
   the L1 indication message reuses a short message of a paging message.
34. The method according to supplement 33, wherein,
   an idle bit in the short message is used to indicate applying the security configuration in the stored first configuration information.
35. The method according to supplement 33 or 34, wherein,
   when the short message is associated with a paging message, a terminal equipment ID is included in the paging message and the short message indicates applying the security configuration in the stored first configuration information, the first terminal equipment applies the security configuration in the stored first configuration information.
36. The method according to supplement 33, wherein,
   the idle bit in the short message indicates applying an index of the security configuration in the stored first configuration information.
37. The method according to supplement 36, wherein,
   when the short message is associated with a paging message, a terminal equipment ID is included in the paging message and the short message indicates applying an index of the security configuration in the stored first configuration information, the first terminal equipment applies a security configuration to which the index of the security configuration in the stored first configuration information corresponds.
38. The method according to supplement 32, wherein,
   the MAC indication message indicates whether to apply the security configuration in the stored first configuration information or indicates a cell ID via an MAC CE.
39. The method according to supplement 38, wherein,
   one bit in the MAC CE is used to indicate whether to apply the security configuration in the stored first configuration information.
40. The method according to supplement 38, wherein,
   when the MAC CE includes a cell ID, a security configuration corresponding to the cell ID in the stored first configuration information is applied.
41. The method according to supplement 29 or 30, wherein,
   the first indication information is provided implicitly when a cell ID change of identical physical cell IDs (PCIs) detected by the first terminal equipment.
42. The method according to supplement 41, wherein,
   when a cell ID is configured via operation administration and maintenance (OAM) or signaling and the cell ID is different from a previous cell ID, the new cell ID is applied,
   the application of the new cell ID including that system information and an RRC dedicated message include the new cell ID.
43. The method according to any one of supplements 29-42, wherein the method further comprises:
   receiving the first configuration information from the source IAB donor node of the first IAB-node.
44. The method according to any one of supplements 29-43, wherein,
   the first configuration information is comprised in a first RRC message.
45. The method according to supplement 44, wherein,
   the first RRC message includes second indication information,
   the second indication information being used for indicating that the first terminal equipment stores the first RRC message or a part of configurations in the first RRC message or the first configuration information including the security configuration.
46. The method according to supplement 44 or 45, wherein,
   the first RRC message is a migration configuration message, or a security update message, or an RRC reconfiguration message.
47. The method according to any one of supplements 29-32, wherein,
   the security configuration in the first configuration information comprises a security configuration of a cell.
48. The method according to supplement 47, wherein,
   the security configuration in the first configuration information comprises at least one entry, the at least one entry comprising a cell ID and a security configuration corresponding to the cell ID.
49. The method according to supplement 47, wherein,
   the first configuration information further comprises a condition for applying the security configuration in the stored first configuration information and/or a valid time and/or area of the entry.
50. A migration method for an IAB-node, applicable to a first IAB donor node, the first IAB donor node being a source IAB donor node of a first IAB-node,
   the method comprising:
   transmitting first configuration information to the first IAB-node, the first configuration information comprising security configuration configured by a target IAB donor node; and
   transmitting third indication information to the target IAB donor node, the third indication information being used for indicating that the first terminal equipment applies the security configuration in the first configuration information, the first terminal equipment comprising a terminal equipment served by the first IAB-node and/or a terminal equipment served by a descendant IAB-node of the first IAB-node.
51. The method according to supplement 50, wherein,
   the third indication information is transmitted by the source IAB donor node of the first IAB-node to the first terminal equipment via the target IAB donor node and the first IAB-node.
52. The method according to supplement 51, wherein,
   the third indication information is transmitted by the source IAB donor node of the first IAB-node to the target IAB donor node via an Xn interface or an NG interface, and is transmitted by the target IAB donor node to the first IAB-node via an F1 interface.
53. The method according to any one of supplements 50-52, wherein,
   the third indication information is included in a system message or a terminal equipment-specific dedicated message.
54. The method according to supplement 53, wherein,
   when a network device includes an indication in a system message, the first terminal equipment applies the security configuration; or,
   when the network device includes a cell ID in the system message, the first terminal equipment applies a corresponding configuration of the cell in the security configuration.
55. The method according to any one of supplements 50-54, wherein the transmitting the first configuration information to the first IAB-node comprises:
   transmitting the first configuration information to the first IAB-node via the Xn interface or the NG interface.
56. The method according to any one of supplements 50-55, wherein,
   the first configuration information is included in a first RRC message.
57. The method according to supplement 56, wherein,
   the first RRC message may include second indication information,
   the second indication information being used for indicating that the first terminal equipment stores the first RRC message or a part of configurations in the first RRC message or the first configuration information including the security configuration.
58. The method according to supplement 56 or 57, wherein,
   the first RRC message is a migration configuration message, or a security update message, or an RRC reconfiguration message.
59. The method according to any one of supplements 50-58, wherein,
   the security configuration in the first configuration information includes security configuration of a cell.
60. The method according to supplement 59, wherein,
   the security configuration in the first configuration information includes at least one entry, the entry including a cell ID and a security configuration corresponding to the cell ID.
61. The method according to supplement 60, wherein,
   the first configuration information further includes a condition for applying the security configuration in the stored first configuration information and/or a valid time and/or area of the entry.

## Claims

1. A migration apparatus for an IAB-node, applicable to a first terminal equipment, the first terminal equipment comprising a terminal equipment served by a first IAB-node and/or a terminal equipment served by a descendant IAB-node of the first IAB-node, the apparatus comprising:
a first storage unit configured to store first configuration information, the first configuration information comprising security configuration configured by a target IAB donor node; and
a first applying unit configured to apply the security configuration in a stored first configuration information when first indication information is obtained or the security configuration in the stored first configuration information comprises security configuration corresponding to a selected or reselected cell.

2. The apparatus according to claim 1, wherein,
the first indication information is comprised in an L1 indication message or an MAC indication message.

3. The apparatus according to claim 2, wherein,
the L1 indication message reuses a short message of a paging message.

4. The apparatus according to claim 3, wherein,
an idle bit in the short message is used to indicate applying the security configuration in the stored first configuration information.

5. The apparatus according to claim 3, wherein,
the idle bit in the short message indicates applying an index of the security configuration in the stored first configuration information.

6. The apparatus according to claim 2, wherein,
the MAC indication message indicates whether to apply the security configuration in the stored first configuration information or indicates a cell ID via an MAC CE.

7. The apparatus according to claim 6, wherein,
when the MAC CE includes a cell ID, the first applying unit applies security configuration corresponding to the cell ID in the stored first configuration information.

8. The apparatus according to claim 1, wherein,
the first indication information is provided explicitly by a source IAB donor node of the first IAB-node.

9. The apparatus according to claim 8, wherein,
the first indication information is transmitted by the source IAB donor node of the first IAB-node to the first terminal equipment via a target IAB donor node of the first IAB-node and the first IAB-node.

10. The apparatus according to claim 9, wherein,
the first indication information is transmitted by the source IAB donor node of the first IAB-node to the target IAB donor node of the first IAB-node via an Xn interface or an NG interface, and is transmitted by the target IAB donor node to the first IAB-node via an F1 interface.

11. The apparatus according to claim 1, wherein,
the first indication information is provided implicitly by changing a cell IDwhen a cell ID change of identical physical cell IDs (PCIs) detected by the first terminal equipment.

12. The apparatus according to claim 1, wherein,
the first configuration information is comprised in a first RRC message.

13. The apparatus according to claim 12, wherein,
the first RRC message comprises second indication information,
the second indication information being used for indicating that the first terminal equipment stores the first RRC message or a part of configurations in the first RRC message or the first configuration information including the security configuration.

14. The apparatus according to claim 1, wherein the apparatus further comprises:
a first detecting unit configured to perform integrity detection; and
a second detecting unit configured to perform cell selection or reselection when the integrity detection fails.

15. The apparatus according to claim 14, wherein the apparatus further comprises:
a first processing unit configured to perform connection reestablishment or apply the security configuration in the first stored first configuration information according to a selected or reselected cell.

16. A migration apparatus for an IAB-node, applicable to a first IAB-node, the apparatus comprising:
a first transmitting unit configured to transmit first configuration information to a terminal equipment served by the first IAB-node and/or a descendant IAB-node of the first IAB-node, the first configuration information comprising security configuration configured by a target IAB donor node; and
a second transmitting unit configured to transmit first indication information to the terminal equipment and/or the descendant IAB-node, the first indication information being used for indicating that a first terminal equipment applies the security configuration in the first configuration information, the first terminal equipment comprising the terminal equipment served by the first IAB-node and/or a terminal equipment served by the descendant IAB-node of the first IAB-node.

17. The apparatus according to claim 16, wherein,
the first indication information is provided implicitly by changing a cell ID by using identical physical cell IDs (PCIs).

18. A migration apparatus for an IAB-node, applicable to a first IAB donor node, the first IAB donor node being a source IAB donor node of a first IAB-node,
the apparatus comprising:
a third transmitting unit configured to transmit first configuration information to the first IAB-node, the first configuration information comprising security configuration configured by a target IAB donor node; and
a fourth transmitting unit configured to transmit third indication information to the target IAB donor node, the third indication information being used for indicating that the first terminal equipment applies the security configuration in the first configuration information, the first terminal equipment comprising a terminal equipment served by the first IAB-node and/or a terminal equipment served by a descendant IAB-node of the first IAB-node.

19. The apparatus according to claim 18, wherein,
the third indication information is transmitted by the source IAB donor node of the first IAB-node to the first terminal equipment via the target IAB donor node and the first IAB-node.

20. The apparatus according to claim 19, wherein,
the third indication information is transmitted by the source IAB donor node of the first IAB-node to the target IAB donor node via an Xn interface or an NG interface, and is transmitted by the target IAB donor node to the first IAB-node via an F 1 interface.
